# EUROPÄISCHE PATENTSCHRIFT

(11) **EP 2 637 382 B1**
(45) Veröffentlichungstag und Bekanntmachung des Hinweises auf die Patenterteilung: **24.02.2016**
(21) Anmeldenummer: 13170677.2
(22) Anmeldetag: 16.11.2009
(51) Int. Cl.: H04L 29/06

(54) **VERFAHREN ZUR AUTORISIERUNG EINER TRANSAKTION**
METHOD FOR AUTHORIZING A TRANSACTION
PROCEDE D'AUTORISATION D'UNE TRANSACTION

(30) Priorität: 01.12.2008 DE 102008059723
(43) Veröffentlichungstag der Anmeldung: 11.09.2013
(62) Teilanmeldung aus: 09756471.0
(73) Patentinhaber: tagPAY GmbH, 76137 Karlsruhe (DE)
(72) Erfinder: Schwerdtfeger, Stefan, 76137 Karlsruhe (DE); Dörfel, Christian, 76227 Karlsruhe (DE); Hengherr, Michael Alexander, 79793 Wutöschingen (DE)
(74) Vertreter: 2s | ip Schramm Schneider Patentanwälte Rechtsanwälte

(56) Entgegenhaltungen:
- WO-A1-2005/008608
- WO-A2-01/57617
- DE-A1- 10 243 292
- DE-A1-102007 005 427

## Beschreibung

Die Erfindung betrifft ein Verfahren und eine Einrichtung zur Autorisierung einer Transaktion zwischen einem Dienstanbieter und einem Dienstnutzer.

Die Autorisierung dient dazu, eine oder mehrere Transaktionen, welche eine Prüfung der Berechtigung der Transaktionen voraussetzen, einzuleiten. Verfahren und Einrichtungen zur Autorisierung sind aus dem Stand der Technik bekannt. So sind etwa Verfahren bekannt, mit denen das Laden von digitalen Inhalten auf einer Internet-Seite autorisiert werden kann. Dazu wird beispielsweise auf einer Internet-Seite (welche in einem Internet-Browser eines Computers angezeigt wird) ein Link in Form einer URL (Uniform Resource Locator) zu dem digitalen Inhalt bereitgestellt. Ein Klicken auf diesen Link führt dazu, dass eine weitere Internet-Seite geladen wird, auf welcher verschiedene Transaktionsdaten, Informationen zur Durchführung der Transaktion und ein weiterer Link zum Laden des digitalen Inhaltes angezeigt werden. Die Transaktionsdaten sind hier z.B. eine Transaktions-URL.

Die Transaktions-URL kann dann beispielsweise auf einem WAP-fähigen Mobiltelefon eingegeben werden, um die Autorisierung zu initiieren. Der Dienstleister, welcher die digitalen Inhalte bereitstellt, ermittelt anhand der Transaktions-URL und den Protokolldaten des WAP-Datenkanals, über den die Transaktions-URL aufgerufen wird, eine dem Mobiltelefon zuordenbare Kennung (z.B. MSISDN), um die Transaktion (z.B. Laden der Inhalte) zu autorisieren und um über diese Kennung beispielsweise das Laden der digitale Inhalte abzurechnen, wobei die Abrechnung selbst meist über den Netzbetreiber des Mobilfunk-Teilnehmers (Nutzers) erfolgt. Auf dem Mobiltelefon erhält der Benutzer anschließend eine mobile Internetseite mit dem Hinweis, dass der digitale Inhalt freigeschaltet sei (und somit die Autorisierung und der Bezahlvorgang erfolgreich waren) und das Laden des digitalen Inhaltes im Internet-Browser des Computers bzw. im WAP-Browser des mobilen Endgerätes (z.B. Mobiltelefon) nun durchgeführt werden könne. Der Benutzer kann dann auf den weiteren Link klicken, um den digitalen Inhalt einzusehen.

Nachteilig an dem Verfahren ist zum einen, dass es manuelle Eingaben des Benutzers am Mobiltelefon (Eingabe der Transaktions-URL) erfordert, was fehleranfällig ist (z.B. fehlerhafte Eingabe der Transaktions-URL) und somit zu einer fehlerhaften Abrechung führen kann oder dazu führen kann, dass die angeforderten Inhalte nicht frei geschaltet werden. Es können auch Fehler passieren, welche die vollständige Durchführung des Verfahrens unmöglich machen, z.B. fehlerhafte Eingabe beim Eintippen der URL, beim Eintippen der eigenen MSISDN / Kennung / ID etc. Zum anderen kann nicht gewährleistet werden, dass eine Autorisierung und damit eine Transaktion durchführbar sind. So kann etwa eine Autorisierung nicht durchgeführt werden, wenn der Anbieter der digitalen Inhalte die Kennung des Mobiltelefons aufgrund technischer Unzulänglichkeiten des Mobiltelefons nicht ermitteln kann, z.B. wenn das Mobiltelefon seine Kennung nicht übermitteln kann. Dies ist etwa der Fall, wenn der benutzte Übertragungskanal, z.B. ein WAP-Datenkanal, die Übertragung der Mobiltelefon-Kennung nicht unterstützt. Wenn anstelle des WAP-Datenkanals ein IP-Datenkanal verwendet wird, kann eine Ermittlung der Kennung des mobilen Endgerätes ebenfalls nicht gewährleistet werden.

Ohne Kennung des Mobiltelefons kann in vielen Fällen weder eine Autorisierung noch eine Bezahltransaktion durchgeführt werden. Dem Benutzer wird so der Zugriff auf die digitalen Inhalte aufgrund technischer Einschränkungen vorenthalten.

Die Druckschrift DE10243292-A1 beschreibt ein Autorisierungsverfahren einer Internet-Transaktion wie im Oberbegriff des unabhängigen Anspruch 1 der vorliegenden Anmeldung zusammengefasst.

Aus der US 2007/0107044 A1 ist ein Verfahren zur Durchführung einer Autorisierung einer Internet-Transaktion durch eine Autorisierungseinrichtung bekannt, wobei ein erstes Endgerät und ein zweites Endgerät über ein Kommunikationsnetzwerk mit der Autorisierungseinrichtung koppelbar sind, wobei die Transaktion an einem der beiden Endgeräte durchführbar ist und wobei die Autorisierung an einem der beiden Endgeräte initiierbar ist. Ein Autorisierungsvorgang führt zu einer Vierweigerung der Durchführung der Transaktion, wenn eine Ermittlung einer Kennung des Endgerätes fehlschlägt. Die Transaktionsdaten für die Transaktion werden über einen zweiten Übertragungskanal von der Autorisierungseinrichtung empfangen.

Aufgabe der Erfindung ist es daher, ein Verfahren und eine Einrichtung zur Autorisierung einer Transaktion bereitzustellen, welche eine Autorisierung zur Durchführung der Transaktion einerseits vereinfachen und andererseits auch dann durchführbar machen, wenn technische Gegebenheiten eine herkömmliche Autorisierung nicht zulassen.

In einem ersten Aspekt der Erfindung wird ein Verfahren bereitgestellt, zur Durchführung einer Autorisierung einer Internet-Transaktion durch eine Autorisierungseinrichtung, wobei die Transaktion an einem ersten Endgerät durchführbar ist, wobei der Autorisierungsvorgang an einem zweiten Endgerät initiierbar ist und wobei die Autorisierung durch die Autorisierungseinrichtung die Schritte umfasst:
- Empfangen von Transaktionsdaten durch die Autorisierungseinrichtung von dem zweiten Endgerät;
- Ermitteln, durch die Autorisierungseinrichtung, einer Kennung, welche das zweite Endgerät identifiziert;
- Ermitteln einer Transaktionsberechtigung, welche der Kennung des zweiten Endgerätes zuordenbar ist, wobei die Transaktionsberechtigung abhängig von den Transaktionsdaten ist;
- Freigeben der Durchführung der Internet-Transaktion in Abhängigkeit von der Transaktionsberechtigung; und
- Bereitstellen von Daten, welche indikativ für die Freigabe der Durchführung der Internet-Transaktion sind, zur Ausgabe auf dem ersten Endgerät oder auf dem zweiten Endgerät, wobei die Daten die Durchführung der Internet-Transaktion ermöglichen.

Der Vorteil gegenüber dem aus dem Stand der Technik bekannten Verfahren liegt darin, dass eine Autorisierung für eine Internet-Transaktion selbst dann durchführbar ist, wenn das Endgerät oder der bereitgestellte Übertragungskanal eine Autorisierung aufgrund technischer Einschränkungen zunächst nicht zulassen. Stellt die Autorisierungseinrichtung fest, dass die Kennung des Endgerätes, an welchem der erste Autorisierungsvorgang initiiert worden ist, nicht ermittelbar ist, fordert sie automatisch die Autorisierung über einen zweiten Übertragungskanal vom einem Endgerät an. Die Wahrscheinlichkeit, dass die Autorisierung erfolgreich abgeschlossen werden kann, wird damit deutlich erhöht.

Bei geeigneter Wahl des zweiten Übertragungskanals, etwa ein Übertragungskanal, welcher die Kennung eines Endgerätes immer überträgt, kann sogar mit sehr hoher Wahrscheinlichkeit sichergestellt werden, dass Autorisierung erfolgreich abgeschlossen werden kann.

Das Verfahren kann auch die Durchführung einer Autorisierung einer Internet-Transaktion durch eine Autorisierungseinrichtung umfassen, wobei die Transaktion an einem ersten Endgerät durchführbar ist, wobei die Autorisierung an einem zweiten Endgerät initiierbar ist, oder wobei die Transaktion und die Autorisierung an dem ersten Endgerät oder an dem zweiten Endgerät durchführbar und initiierbar sind, wobei das erste Endgerät und das zweite Endgerät über ein Kommunikationsnetzwerk mit der Autorisierungseinrichtung koppelbar sind und wenn der Autorisierungsvorgang, welcher die Schritte
- Empfangen von Transaktionsdaten durch die Autorisierungseinrichtung von dem zweiten Endgerät, wobei die Transaktionsdaten über einen ersten Übertragungskanal empfangen werden; und
- Ermitteln, durch die Autorisierungseinrichtung, einer Kennung, welche das zweite Endgerät identifiziert;
umfasst, zu einer Verweigerung der Durchführung der Transaktion aufgrund einer fehlgeschlagenen Ermittlung der Kennung führt, wobei die Autorisierungseinrichtung aufgrund der Verweigerung Daten erzeugt zur Übertragung auf das erste Endgerät oder auf das zweite Endgerät, wobei die Daten die Transaktionsdaten und eine Anweisung zur Initiierung eines zweiten Autorisierungsvorganges durch das zweite Endgerät über einen zweiten Übertragungskanal enthalten, wobei die Transaktionsdaten über den zweiten Übertragungskanal von der Autorisierungseinrichtung empfangen werden, und wobei das Erzeugen der Daten durch die Autorisierungseinrichtung ein Ermitteln der Hardwareeigenschaften des ersten oder des zweiten Endgerätes und ein Anpassen der Daten an die Hardwareeigenschaften umfasst.

Wenn der erste Autorisierungsvorgang fehlschlägt, weil über den ersten Übertragungskanal für das zweite Endgerät keine Kennung ermittelt werden kann, weil die Kennung etwa nicht übertragen worden ist, wird ein zweiter Autorisierungsvorgang von dem zweiten Endgerät über einen zweiten Übertragungskanal angefordert. Damit kann die Wahrscheinlichkeit, dass für das zweite Endgerät eine Kennung ermittelt werden kann, deutlich erhöht werden.

Ein weiterer Vorteil besteht darin, dass ein Dienstanbieter, welcher beispielsweise einen Zugang zu (kostenpflichtigen) elektronischen Dokumenten bereitstellt, lediglich eine Art der Autorisierung zur Verfügung stellen muss. Ist die erste Autorisierung über die bereitgestellte Art der Autorisierung (z.B. IP-Autorisierung über ein Mobiltelefon) nicht möglich, fordert die Autorisierungseinrichtung automatisch eine zweite Autorisierung über ein zweites Autorisierungsverfahren an, welche über das selbe Endgerät erfolgen kann wie die fehlgeschlagene erste Autorisierung. Indem die Hardwareeigenschaften des Endgerätes ermittelt werden, kann die Anforderung für eine zweite Autorisierung entsprechend der Hardwareeigenschaften des Endgerätes angepasst werden.

Der zweite Autorisierungsvorgang kann von der Autorisierungseinrichtung durchgeführt werden und einen Schritt zum Ermitteln einer zweiten Kennung, welche jenem Endgerät zugeordnet ist, welches den zweiten Autorisierungsvorgang initiiert, und welches jenes Endgerät identifiziert, umfassen.

Der zweite Autorisierungsvorgang kann vorzugsweise einen Schritt zum Ermitteln einer Transaktionsberechtigung umfassen, wobei die Transaktionsberechtigung abhängig von der Kennung des zweiten Endgerätes sein kann.

Das Ermitteln der zweiten Kennung kann eine Anfrage an eine Servereinrichtung und ein Empfangen der zweiten Kennung von der Servereinrichtung umfassen. Die Servereinrichtung kann auch Bestandteil der Autorisierungseinrichtung sein. Das ist insbesondere dann vorteilhaft, wenn das Endgerät über den zweiten Übertragungskanal mit einer Servereinrichtung kommuniziert. Die Autorisierungseinrichtung kann so auch ohne Zugriff auf den zweiten Übertragungskanal die zweite Kennung ermitteln.

Die zweite Kennung kann über den zweiten Übertragungskanal von der Autorisierungseinrichtung empfangen werden.

Der zweite Übertragungskanal kann ein Mobilfunk-Kurznachrichtenkanal, d.h. ein SMS-Daten- und Signalkanal sein. Damit wird sichergestellt, die zweite Kennung immer ermittelt werden kann, weil der Mobilfunk-Kurznachrichtenkanal die Übertragung einer Kennung vorsieht.

Die Kennung des zweiten Endgerätes umfasst zumindest eines aus Mobile Subscriber Integrated Services Digital Network Number (MSISDN), Eigentümer und Eigentümer-ID.

In einer bevorzugten Ausführungsform kann die Anweisung zur Initiierung des zweiten Autorisierungsvorganges umfassen:
- Daten zum manuellen Erzeugen und Versenden einer Kurznachricht (SMS); oder
- Daten zum automatischen Erzeugen und Versenden einer Kurznachricht eines vorherbestimmten Inhaltes an eine vorherbestimmte Telefonnummer; oder
- graphischer Code, in welchem die Daten für ein automatisches Erzeugen und Versenden einer Kurznachricht eines vorherbestimmten Inhaltes an eine vorherbestimmte Telefonnummer codiert sind.

Das Ermitteln der Hardwareeigenschaften umfasst bevorzugt ein Ermitteln der Hardwareeigenschaften der Anzeigeeinrichtung des ersten oder des zweiten Endgerätes. Indem die Hardwareeigenschaften der Anzeigeeinrichtung des Endgerätes ermittelt werden, kann die Anforderung für eine zweite Autorisierung entsprechend der Anzeigeeinrichtung angepasst werden. Damit ist es möglich, die Anforderung in Abhängigkeit von dem Endgerät für jedes Endgerät verfügbar zu machen.

Weitere Einzelheiten und Merkmale der Erfindung ergeben sich aus den Patentansprüchen, sowie der nachfolgenden Beschreibung in Verbindung mit der Zeichnung. Es zeigt
- Fig. 1: eine erste Ausführungsform des erfindungsgemäßen Verfahrens (WAP-Autorisierung);
- Fig. 2: eine weitere Ausführungsform des erfindungsgemäßen Verfahrens (SMS-Autorisierung);
- Fig. 3: eine weitere Ausführungsform des erfindungsgemäßen Verfahrens (PC-WAP-Autorisierung);
- Fig. 4: eine weitere Ausführungsform des erfindungsgemäßen Verfahrens (PC-WAP-SMS-Autorisierung);
- Fig. 5: eine weitere Ausführungsform des erfindungsgemäßen Verfahrens (PC-PremiumSMS-Autorisierung);
- Fig. 6: einen Verfahrensbestandteil des erfindungsgemäßen Verfahrens zur Verwendung mit den Ausführungsformen nach Fig. 3 und Fig. 4;
- Fig. 7: einen Verfahrensbestandteil des erfindungsgemäßen Verfahrens zur Verwendung mit der Ausführungsform nach Fig. 5;
- Fig. 8: eine weitere Ausführungsform des erfindungsgemäßen Verfahrens, wobei die Ausführungsformen nach Fig. 3 und Fig. 5 kombiniert sind; und
- Fig. 9: eine weitere Ausführungsform des erfindungsgemäßen Verfahrens, wobei die Ausführungsformen nach Fig. 4 und Fig. 5 kombiniert sind.

Nachfolgend wird das erfindungsgemäße Verfahren des Autorisierungsvorgangs beschreiben, wobei davon ausgegangen wird, dass dem Autorisierungsvorgang eine Bezahltransaktion folgt. Anstelle der Bezahltransaktion können auch andere Transaktionen folgen.

Mit "Autorisierung" wird die Zuweisung und Überprüfung von Zugriffsrechten auf Daten und Dienste an Benutzer bezeichnet. Die Autorisierung kann nach einer erfolgreichen Authentifizierung (Überprüfung (Verifikation) einer behaupteten Identität, z.B. einer Person) erfolgen. Eine erfolgreiche Autorisierung erlaubt z.B. den Zugriff auf so genannte Ressourcen (z. B. auf Daten) in einem Computernetzwerk, wie etwa das Internet.

### 1) WAP-Autorisierung

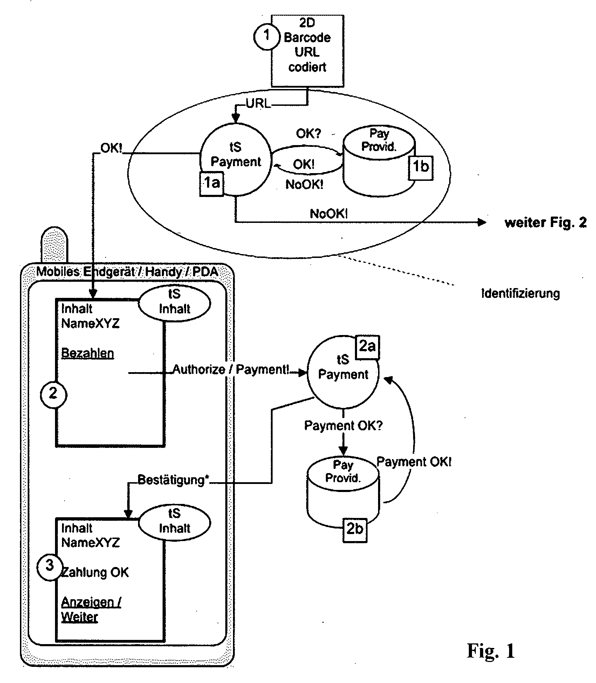

**Fig. 1** zeigt einen erfindungsgemäßen Autorisierungsvorgang (WAP-Autorisierung) mit anschließender Bezahltransaktion über das sog. WAP/IP-Payment, bzw. wie eine User-Ermittlung oder Geräte-Erkennung erfolgen kann.

Ausgangspunkt ist ein graphischer Code 1, welcher auf einem Druckerzeugnis aufgebracht ist oder etwa auf einem Bildschirm angezeigt wird. Als graphischer Code kann etwa ein Strichcode (Barcode), ein 2D-Code, wie z.B. Matrix-Code (QR-Code, Data-Matrix, etc.) oder ein farbiger Code, wie z.B. HCCB (High Capacity Color Barcode) verwendet werden. In den nachfolgenden Ausführungsbeispielen wird immer ein Barcode verwendet. Es können aber jeweils auch die anderen genannten graphischen Codes vorgesehen werden.

Für die Initiierung einer Transaktion kann aber auch Nahfeld-Technologie, wie z.B. RFID vorgesehen. Das Druckerzeugnis kann mit einem RFID-Tag versehen sein, welches die für die Transaktion notwendigen Daten speichert. Diese Daten können z.B. mit einem mobilen Endgerät ausgelesen werden.

In dem Barcode oder dem RFID-Tag kann beispielsweise eine URL codiert oder gespeichert sein. Die mit dieser URL verknüpfte Internetseite kann zusätzliche (z.B. kostenpflichtige) Information zu dem Druckerzeugnis bereithalten.

Der Autorisierungsvorgang, um Zugriff auf die in der URL codierte Internetseite zu erhalten, wird über das mobile Endgerät abgewickelt. In diesem und in den nachfolgenden Ausführungsbeispielen kann das mobile Endgerät ein Mobiltelefon, ein PDA mit Mobiltelefon-Funktionalität (Smartphone), ein Laptop mit Mobiltelefon-Funktionalität o.ä. sein. Die Mobiltelefon-Funktionalität kann z.B. auf den Übertragungstechniken GSM (Global System for mobile Communication) oder UMTS (Universal Mobile Telecommunications System) basieren. Ein stationäres Endgerät kann z.B. ein herkömmlicher Computer sein. Ein stationäres Endgerät kann aber auch ein PDA oder ein Laptop sein, welche geeignet sind, etwa digitale Inhalte z.B. über das Internet zu laden.

Der Autorisierungsvorgang umfasst einen oder mehrere Schritte, in denen zunächst versucht wird das Gerät, welches sich Zugang zu den Daten verschaffen will, zu identifizieren. Beispielsweise kann das Gerät anhand der MSISDN oder einer IP-Adresse identifizierbar sein. In einem weiteren Schritt (innerhalb der Autorisierung) wird dann geprüft, ob dem identifizierten Gerät eine Berechtigung für den Zugriff erteilt werden kann. Kann das Gerät identifiziert werden und kann dem Gerät eine Berechtigung zugewiesen werden, ist der Autorisierungsvorgang erfolgreich abgeschlossen.

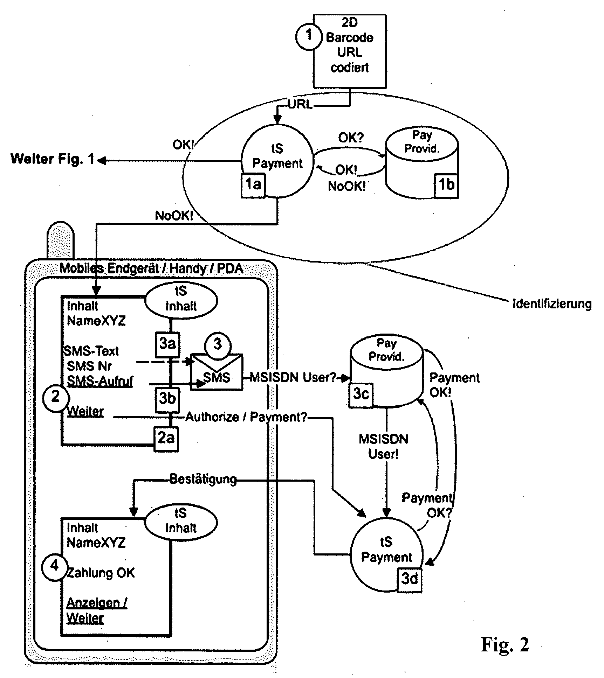

Sobald der Autorisierungsvorgang, welchem eine Bezahltransaktion folgen kann, über das mobile Endgerät abgeschlossen ist, kann auf dem mobilen Endgerät der bezahlte Inhalt eingesehen oder abgerufen werden. Der Autorisierungsvorgang kann auch eine Reihe von anschließenden Transaktionen erlauben (dies gilt auch für nachfolgenden Ausführungsformen nach Fig. 2 bis Fig. 9). Beispielsweise können nach einem erfolgreich durchgeführten Autorisierungsvorgang in einem Onlineshop mehrere Einkäufe getätigt werden.

In den Barcode 1 kann z.B. eine Internet-Adresse codiert sein. Das mobile Endgerät, etwa ein Mobiltelefon, kann mithilfe einer Barcode-Lese-Software (nachfolgend als Barcode-Reader bezeichnet) über die Kamera des Mobiltelefons den Barcode einlesen. Der Barcode-Reader erkennt die darin codierte Internet-Adresse und bietet die Option an, die Adresse z.B. im Browser des Mobiltelefons aufzurufen. Das Aufrufen kann gegebenenfalls vom Nutzer bestätigt werden. Der Browser des mobilen Endgeräts ruft anschließend die zur Internet-Adresse gehörende Internet-Seite auf.

Im Rahmen einer so genannten Identifizierung, welche die Authentifizierung, die Autorisierung und die Geräteeigenschaften des anfragenden Gerätes ermittelt, werden zwei Prozesse durchlaufen:
- Der Prozess "tsPayment" ermittelt, ob eine Authentifizierung und Autorisierung durchgeführt werden können (Schritt 1b). tsPayment kann so ausgestaltet sein, dass darüber auch ein Bezahlprozess abgewickelt werden kann, welcher nach einer erfolgreichen Autorisierung stattfinden kann.
- Der Prozess "tsInhalt" ermittelt, in welcher Form die Darstellung der Internet-Seite auf dem Endgerät zu erfolgen hat (Schritt 1a). Je nach Art des Endgerätes, z.B. Mobiltelefon oder Computerbildschirm wird die Internet-Seite von tsInhalt entsprechend aufbereitet.

Die beiden Prozesse können auf einem Webserver laufen. Die Prozesse können aber auch auf verschiedenen Webserver laufen, wobei die Prozesse über eine spezielle Schnittstelle miteinander kommunizieren.

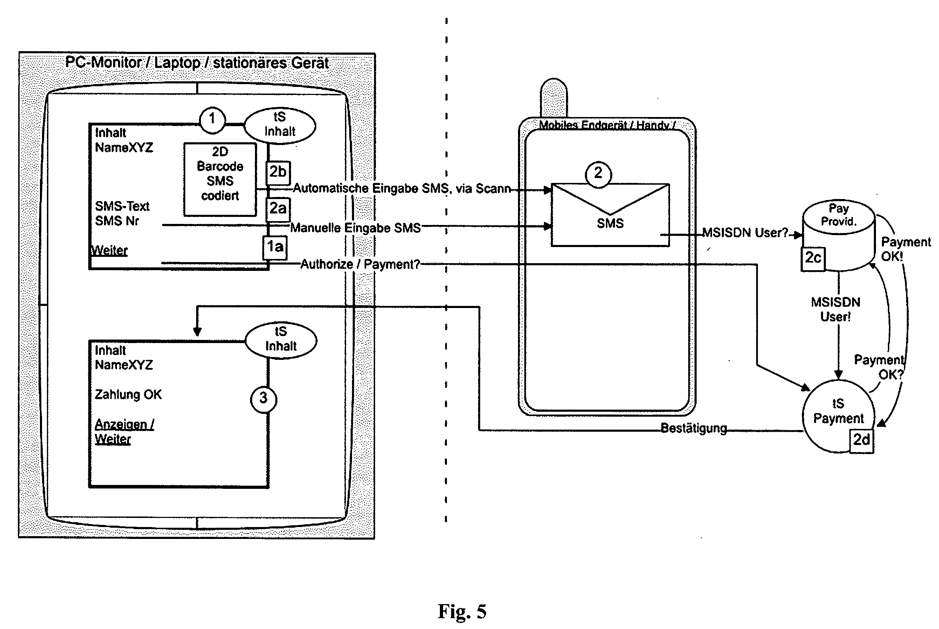

Die beiden Schritte 1 a und 1b sind für die nachfolgend beschriebenen Ausführungsformen in Fig. 2 bis Fig. 9 jeweils identisch. Davon ausgenommen ist lediglich die Ausführungsform nach Fig. 5.

### Schritt 1a:

Der ausliefernde Webserver (tSInhalt) erkennt z.B. mittels Useragent-Erkennung (oder Geräteerkennung), dass die Internet-Seite für ein kleines Display (die üblicherweise bei mobilen Geräten eingesetzt werden) ausgeliefert / ausgegeben werden muss.

### Schritt 1b:

Über eine Schnittstelle wird beim Payment-Provider (in den Figuren jeweils mit Pay Provid. bezeichnet) angefragt, ob für das anfragende mobile Endgerät (welches die Internet-Seite aufruft) die Ermittlung der Mobile Subscriber Integrated Services Digital Network Number (MSISDN) des mobilen Endgerätes, des Users, des Eigentümers oder der User-ID durchgeführt werden kann (OK?). Die Art der Ermittlung obliegt dabei dem Payment-Provider.

Anhand der Rückmeldung des Payment-Providers (OK! oder NoOK!) kann eine entsprechende Bezahl-Transaktion eingeleitet:
- WAP/IP mobil (bei OK!) oder
- Internet mobil (bei NoOK!), vgl. Fig. 2.

Bei positiver Rückmeldung (OK!) durch den Payment-Provider wird durch den Webserver (tsInhalt) die Internet-Seite 2 an das mobile Endgerät mit folgenden Elementen ausgegeben: Bezahlen-Link, Inhalt-Intro, Hinweise, Preise, AGB etc. Der Bezahlen-Link kann auch eine andere Bezeichnung haben. Dies stellt den erfolgreichen Abschluss des Autorisierungsvorganges dar.

Bei negativer Rückmeldung (NoOK!), wenn also die MSISDN nicht ermittelt werden kann, bietet der Webserver (tsPayment) automatisch eine alternative Autorisierungsmethode an, um den Autorisierungsvorgang sicher und erfolgreich abzuschließen. Vorteilhaft ist hierbei, dass der Autorisierungsvorgang, im Gegensatz zu den aus dem Stand der Technik bekannten Verfahren, nach einem Fehlversuch nicht einfach beendet wird, sondern dass der Webserver (tsPayment) mittels einer alternativen Autorisierungsmöglichkeit, etwa SMS-Autorisierung versucht, den Autorisierungsvorgang erfolgreich zu beenden. Eine detaillierte Beschreibung hierzu erfolgt mit Bezug auf Fig. 2.

### Schritt 2a:

Mit Klicken auf den Bezahlen-Link wird beim Webserver (tsPayment) die Möglichkeit zur Durchführung der Bezahlung angefragt (Authorize / Payment!). Der Webserver (tsPayment) wiederum fragt über eine Schnittstelle beim Payment-Provider an, ob die Durchführung der Bezahlung möglich ist (Payment OK?).

Der Payment-Provider meldet die Durchführung dieser Transaktion wiederum bei den Mobilfunk-Netzbetreibern an. Die Zuordnung der MSISDN, des Users bzw. des Eigentümers zum entsprechenden Netzbetreiber sowie die Abfrage zur Durchführung einer Bezahltransaktion beim Netzbetreiber (z.B. die Abfrage, ob genügend Prepaid-Guthaben vorhanden ist oder ob die Bonität ausreichend ist oder ob gemäß interner Richtlinien der Mobilfunk-Netzbetreiber eine Transaktion durchführbar ist), obliegt dem Payment-Provider. Es können auch andere Richtlinien bei Abfrage herangezogen werden.

### Schritt 2b:

Kann die Bezahltransaktion durchgeführt werden, so erfolgt eine positive Rückmeldung (Payment OK!) vom Payment-Provider zum anfragenden Webserver (tsPayment).

Der Webserver (tsInhalt) liefert (Bestätigung*) daraufhin eine Internet-Seite 3 an das mobile Endgerät mit einer Bestätigung sowie weiterführenden Links aus. Damit kann der bezahlte Inhalt aufgerufen bzw. geladen werden. Der Autorisierungsvorgang und der Bezahlvorgang waren erfolgreich.

Der Bezahlprozess bzw. die Darstellung des Bezahl-Vorgangs kann über ein oder mehrere Schritte erfolgen. Die Anzahl der durchzuführenden Schritte kann abhängig von den Prozessen und / oder dem Protokoll zwischen dem Payment-Provider und dem entsprechenden Mobilfunk-Netzbetreiber, der im jeweiligen Bezahlprozess eingebunden wird, sein.

Anstelle eines Mobilfunk-Netzbetreibers kann auch eine andere Instanz vorgesehen sein, welche über die nötigen Rechte zur Genehmigung und Durchführung von in diesem Zusammenhang geschilderten Transaktionen verfügt. Der Abschluss einer in diesem Zusammenhang beschriebenen Transaktion bzw. die Ausprägung einer solchen wird hier im Detail nicht spezifiziert. So kann etwa im direkten Anschluss an die Autorisierung ein Bezahlungsvorgang initiiert und abgeschlossen werden oder es kann eine Bestätigung übermittelt werden, nach der die autorisierte Transaktion nach nicht näher genannten Kriterien abgeschlossen werden kann.

### 2) SMS-Autorisierung

**Fig. 2** zeigt einen erfindungsgemäßen Autorisierungsvorgang (SMS-Autorisierung) mit anschließender Bezahltransaktion über das sog. SMS-Billing, bzw. wie eine U-ser-Ermittlung / Geräte-Erkennung erfolgen kann, wenn ein erster Autorisierungsversuch fehlgeschlagen ist. Anstelle einer Bezahltransaktion können dem Autorisierungsvorgang auch andere Transaktionen folgen.

Die SMS-Autorisierung ist im Rahmen der Erfindung vorgesehen, wenn durch den Payment-Provider eine negative Rückmeldung (NoOK!) im Rahmen der WAP-Autorisierung, wie sie mit Bezug auf Fig. 1 beschrieben worden ist, erfolgt. Die SMS-Autorisierung kommt also zum Einsatz, wenn die User-Ermittlung, die Geräte-Erkennung oder die Genehmigung einer Bezahltransaktion gemäß der WAP-Autorisierung nicht durchgeführt werden kann.

Damit wird in vorteilhafter Weise die Wahrscheinlichkeit deutlich erhöht, dass ein Autorisierungsvorgang erfolgreich abgeschlossen werden kann. Durch das Ausweichen auf einen alternativen Autorisierungsvorgang (z.B. SMS-Autorisierung) wird die Autorisierung auch dann erfolgreich abgeschlossen, wenn ein erster Autorisierungsversuch, etwa wegen technischer Unzulänglichkeiten eines Endgerätes fehlgeschlagen ist. Ein Dienstanbieter muss nicht mehr verschiedene Autorisierungsvarianten anbieten, um die Autorisierung über unterschiedliche Endgeräte zu ermöglichen. Für den Dienstanbieter ist das Anbieten einer Autorisierungsvariante ausreichend, da der Webserver (tsPayment) automatisch eine andere Autorisierungsvariante anbietet, über den die Autorisierung abgewickelt werden kann.

Ausgangspunkt ist auch hier ein Barcode 1, welcher auf ein Druckerzeugnis aufgebracht ist oder etwa auf einem Bildschirm angezeigt wird. Der Autorisierungsvorgang wird über das mobile Endgerät abgewickelt.

Sobald der Autorisierungsvorgang (vorzugsweise mit anschließender Bezahltransaktion) über das mobile Endgerät abgeschlossen ist, kann auf dem mobilen Endgerät der bezahlte Inhalt eingesehen oder abgerufen werden.

Das Einlesen des Barcodes mit dem mobilen Endgerät sowie der Aufruf der zur Internet-Adresse (aus dem Barcode) gehörenden Internet-Seite erfolgt wie bereits mit Bezug auf Fig. 1 beschrieben.

Die Prozesse tsPayment (Schritt 1b) und tsInhalt (Schritt 1a) im Rahmen einer Identifizierung werden auf dem Webserver durchlaufen (vgl. Schritt 1a und Schritt 1b zu Fig. 1).

Anhand der Rückmeldung des Payment-Providers (OK! oder NoOK!) wird eine entsprechende Bezahl-Transaktion eingeleitet:
- WAP/IP mobil (bei OK!), vgl. Fig. 1, oder
- Internet mobil (bei NoOK!).

Bei der Beschreibung der in Fig. 2 gezeigten Ausführungsform wird davon ausgegangen, dass die Identifizierung und damit die Autorisierung nicht erfolgreich war (NoOK!).

### Schritt 2:

Bei negativer Rückmeldung durch den Payment-Provider (NoOK!) wird durch den Webserver (tsInhalt) die Internet-Seite 2 an das mobile Endgerät mit folgenden Elementen ausgegeben: SMS-Anweisung, SMS-Text, SMS-Nummer, SMS-Link sowie Inhalt-Intro, Hinweise, Preise, AGB etc. und ein Weiter-Link. Der SMS-Link bzw. der Weiter-Link können auch eine andere Bezeichnung haben.

### Schritt 3:

Gemäß der SMS-Anweisung, welche den SMS-Text und die SMS-Nummer enthält, wird durch das mobile Endgerät, vorzugsweise automatisch durch Klicken, Schritt 3b, auf die SMS-Anweisung eine entsprechende SMS erzeugt. Hierbei wird in Abhängigkeit vom verwendeten mobilen Endgerät, der Version und der Funktionen der vorhandenen Browser-Software die SMS entweder z.B. durch den Browser oder durch die native SMS-Applikation erzeugt. Der SMS-Text kann Transaktionsdaten (z.B. Transaktions-ID) enthalten, welche für die Durchführung einer Transaktion von Relevanz sind.

Besonders vorteilhaft ist hierbei, dass die Bereitstellung einer Autorisierung über eine zweite Autorisierungsvariante so erfolgt, dass der Benutzer des Endgerätes die Autorisierung ohne manuelle Dateneingabe vornehmen kann. Es ist lediglich eine Bestätigung für den Start der Autorisierung erforderlich. Falscheingaben, welche zu Falschbuchungen etc. führen können, werden so effizient vermieden. Alternativ kann das Erzeugen der SMS auch durch manuelle Eingabe erfolgen, Schritt 3a, falls das Endgerät das automatische Erzeugen einer SMS nicht unterstützt.

### Schritt 3c:

Durch den Versand der SMS werden MSISDN, Transaktions- ID, SMS-Text, SMS-Zeichen, etc. an den Payment-Provider übermittelt (MSISDN User?). Somit wird ein anderer Übertragungskanal (SMS-Daten- und Signalkanal) zur Übertragung der Transaktionsdaten genutzt als bei der Übertragung gemäß dem Verfahren nach Fig. 1, wo der WAP-Datenkanal genutzt wird, sodass eine Ermittlung der Kennung des Mobiltelefons und somit eine Autorisierung gewährleistet werden.

Das Zusammenspiel zwischen Payment-Provider und Mobilfunk-Netzbetreiber kann auf unterschiedlichste Art und Weise erfolgen und ist hier nicht näher beschrieben.

### Schritt 3d:

Der Payment-Provider übermittelt dem Webserver (tsPayment) über eine Schnittstelle die MSISDN, den User, den Eigentümer, eine spezielle ID (MSISDN User!) und/oder Transaktionsdetails (z.B. SMS-Text) bzw. eine Kombination davon. Daraufhin fragt der Webserver beim Payment-Provider an, ob die Durchführung der Bezahlung erfolgen kann (Payment OK?). Der Payment-Provider meldet die Durchführung dieser Bezahl-Transaktion wiederum bei den Mobilfunk-Netzbetreibern an.

Die Zuordnung der MSISDN, des Users bzw. des Eigentümers zum entsprechenden Netzbetreiber sowie die Abfrage zur Durchführung einer Bezahltransaktion beim Netzbetreiber (z.B. die Abfrage ob genügend Prepaid-Guthaben vorhanden ist oder ob die Bonität ausreichend ist oder ob gemäß interner Richtlinien der Mobilfunk-Netzbetreiber eine Transaktion durchführbar ist) obliegt dem Payment-Provider.

### Schritt 2a:

Bei Klick auf den Weiter-Link wird beim Webserver (tsPayment) angefragt, ob die Durchführung der Bezahlung erfolgt ist (Authorize / Payment?). Die Anfrage kann auch darin bestehen, nachzufragen, ob die Autorisierung erfolgreich war. Bei negativer Rückmeldung (weil etwa der Schritt 3 nicht vollständig ausgeführt wurde) wird vom Webserver (tsInhalt) die Internet-Seite 2 erneut an das mobile Endgerät mit einem entsprechenden Hinweis ausgegeben.

### Schritt 4:

Bei positiver Rückmeldung (Payment OK!) durch den Payment-Provider liefert der Webserver (tsInhalt) eine Internet-Seite an das mobile Endgerät mit einer Bestätigung sowie weiterführenden Links (Bestätigung) aus. Über diese Links kann der bezahlte Inhalt aufgerufen bzw. geladen werden oder eine neue Transaktion initiiert werden.

Anstelle des Einlesens eines Barcodes kann auf einer mobilen Webseite, welche auf dem mobilen Endgerät angezeigt wird, bereits eine SMS-Anweisung und einen SMS-Link, welche den SMS-Text und die SMS-Nummer enthält, oder die SMS-Nummer und ein SMS-Text angezeigt werden. Der SMS-Link führt dazu, dass die SMS automatisch erzeugt wird. Hierbei wird in Abhängigkeit vom verwendeten mobilen Endgerät, der Version und der Funktionen der vorhandenen Browser-Software die SMS entweder durch den Browser oder durch die native SMS-Applikation erzeugt. Der SMS-Text kann Transaktionsdaten (z.B. Transaktions-ID) enthalten, welche für die Durchführung einer Transaktion von Relevanz sind.

Alternativ kann eine SMS auch manuell mit dem dargestellten SMS-Text an die dargestellte SMS-Nummer versendet werden. Nach erfolgreicher Autorisierung und ggf. Bezahlung wird eine Ergebnisseite an das mobile Endgerät ausgeliefert, welche einen Weiter-Link zum Laden des erworbenen Inhaltes enthält. Anstelle dieser Ergebnisseite kann auch der erworbene Inhalt an das mobile Endgerät ausgeliefert werden. Der Abschluss einer in diesem Zusammenhang beschriebenen Transaktion bzw. die Ausprägung einer solchen wird hier im Detail nicht spezifiziert. So kann etwa im direkten Anschluss an den Autorisierungsvorgang ein Bezahlungsvorgang initiiert und abgeschlossen werden oder es kann eine Bestätigung übermittelt werden, nach der die autorisierte Transaktion nach nicht näher genannten Kriterien abgeschlossen werden kann.

### 3) PC-WAP-Autorisierung

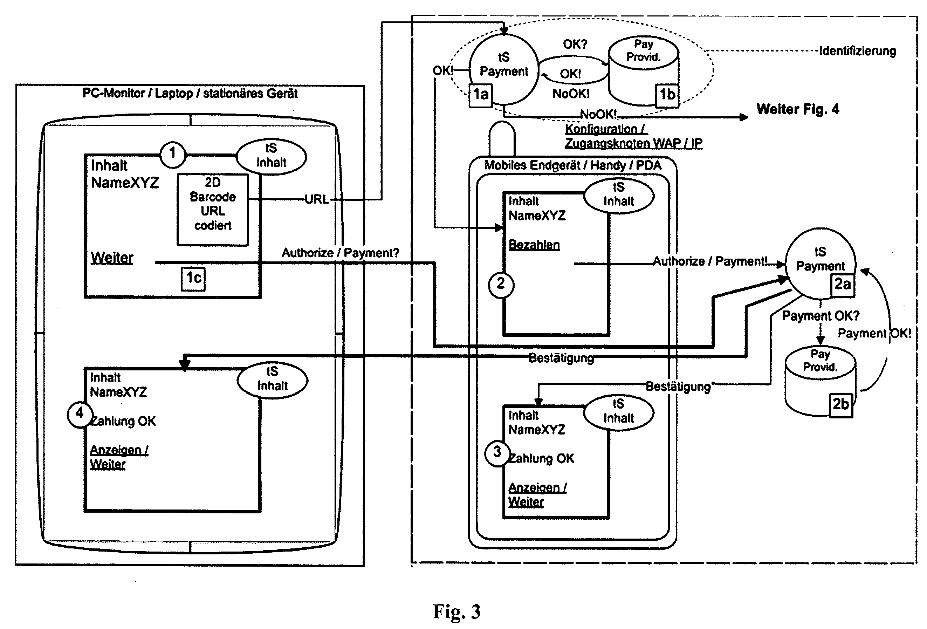

**Fig. 3** zeigt eine Form der Autorisierung (PC-WAP-Autorisierung) mit anschlie-ßender Bezahltransaktion über das sog. WAP/IP-Payment bzw. wie eine User-Ermittlung / Geräte-Erkennung erfolgen kann. Diese Ausführungsform basiert auf dem Verfahren, wie es mit Bezug auf Fig. 1 beschrieben ist.

Der Zugang bzw. die Initiierung der Autorisierung erfolgt über einen Barcode, welcher auf einer Webseite platziert ist. Diese Webseite wird auf einer Anzeigeinrichtung eines stationären Gerätes (z.B. Computer) angezeigt.

Dieses Verfahren (nach Fig. 3) zeichnet sich dadurch aus, dass der über das stationäre Endgerät zugängliche Bereich mit dem über das mobile Endgerät durchgeführten Autorisierungsverfahren verknüpft ist. Das bedeutet, dass am stationären Endgerät auf den Autorisierungs-Vorgang hingewiesen wird. Sobald dieser über das mobile Endgerät durchgeführt worden ist, kann auf dem stationären Endgerät der bezahlte Inhalt eingesehen oder abgerufen werden, bzw. können anschließende Transaktionen (z.B. weitere Einkäufe) durchgeführt werden.

Das heißt, dass das Verfahren über zwei verschiedene Endgeräte abgewickelt wird, indem die Hardwareeigenschaften der Endgeräte ermittelt werden. Die ermittelten Hardwareeigenschaften ermöglichen es der Autorisierungseinrichtung
- die Webseiten für die Darstellung am stationären Endgerät (z.B. PC-Monitor) anzupassen bzw. zu optimieren, zur Durchführung z.B. eines Einkaufes von Inhalten oder Produkten, und
- die Webseiten für die Darstellung auf dem Display von mobilen Endgeräten anzupassen bzw. zu optimieren, zur Durchführung der Autorisierung (z.B. Genehmigung eines Einkaufes).

### Schritt 1:

Auf einer Internet-Seite befindet sich ein 2D-Barcode. Der die Seite ausliefernde Webserver (tsInhalt oder Drittanbieter) erkennt mittels Useragent-Erkennung (oder Geräteerkennung), dass die Internet-Seite für ein stationäres Endgerät (PC-Monitor, Notebook, Laptop o.ä.), ausgeliefert bzw. ausgegeben werden muss.

In den Barcode ist eine Internet-Adresse codiert. Der Barcode wird mit dem mobilen Endgerät eingelesen und ausgewertet. Dies erfolgt wie mit Bezug auf Fig. 1 beschrieben. Der Browser des mobilen Endgeräts ruft die zur Internet-Adresse gehörende Internet-Seite auf.

Im Rahmen der Autorisierung werden nun die zu Fig. 1 beschriebenen Prozesse tsPayment (Schritt 1b) und tsInhalt (Schritt 1a) durchlaufen.

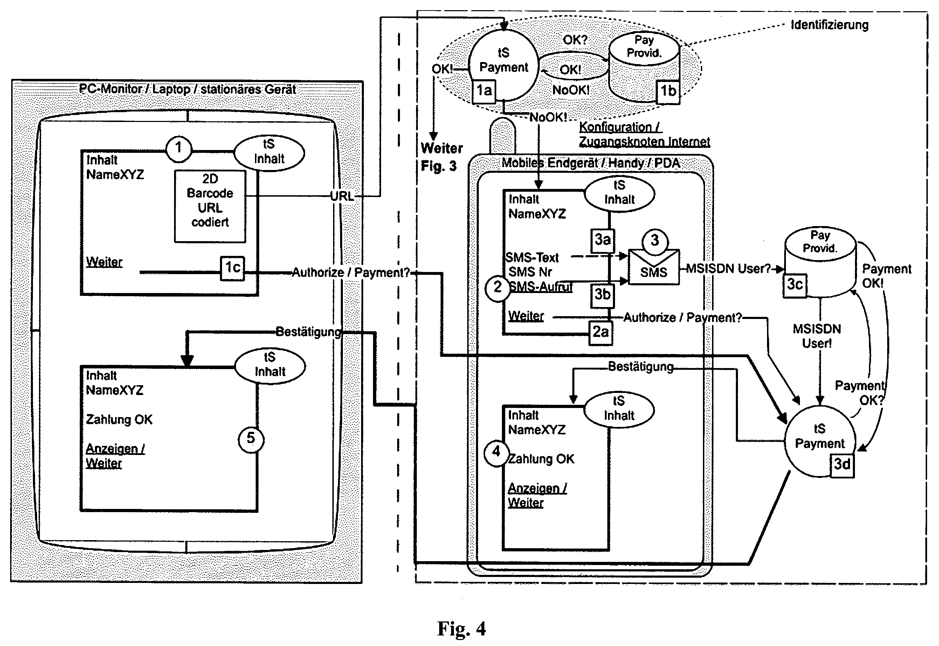

Anhand der Rückmeldung des Payment Providers (OK! oder NoOK!) wird eine entsprechende Bezahl-Transaktion eingeleitet:
- PC - WAP-Payment (OK!), oder
- PC - SMS-Billing (NoOK!), vgl. Fig. 4.

### Schritt 2:

Bei positiver Rückmeldung (OK!) durch den Payment-Provider, wenn die Autorisierung also erfolgreich war, wird von dem Webserver (tsInhalt) die Internet-Seite 2 an das mobile Endgerät mit folgenden Elementen ausgegeben: Bezahlen-Link, Inhalt-Intro, Hinweise, Preise, AGB etc. Der Bezahlen-Link kann auch eine andere Bezeichnung haben.

### Schritt 2a:

Bei Klicken auf den Bezahlen-Link in der Internet-Seite 2 wird beim Webserver (tsPayment) die Möglichkeit zur Durchführung der Bezahlung angefragt (Authorize / Payment!). Der Webserver (tsPayment) wiederum fragt über eine Schnittstelle beim Payment-Provider die Durchführung der Bezahlung an (Payment OK?). Die Kommunikation zwischen Webserver (tsPayment) und Payment-Provider erfolgt wie in Fig. 1 bereits beschrieben.

### Schritt 2b:

Bei positiver Rückmeldung (Payment OK!) durch den Payment-Provider an den Webserver (tsPayment) wird die Bezahltransaktion durchgeführt bzw. die Durchführung genehmigt.

### Schritt 3:

Der Webserver (tsInhalt) liefert daraufhin (Bestätigung*) eine Internet-Seite 3 an das mobile Endgerät mit einer Bestätigung sowie weiterführenden Links. Der Bezahlprozess selbst kann über ein oder mehrere Schritte erfolgen. Dies hängt u.a. von den Prozessen bzw. den Protokollen zwischen dem Payment-Provider und dem entsprechenden Mobilfunk-Netzbetreiber, welche in den jeweiligen Bezahlprozess involviert ist, ab.

Über die weiterführenden Links kann der bezahlte Inhalt aufgerufen bzw. geladen werden oder eine neue Transaktion initiiert werden.

Der Zugriff auf die bezahlten Inhalte kann erfindungsgemäß aber auch über die Webseite 1 am stationären Endgerät erfolgen. Dazu wird nachfolgender Schritt 1c ausgeführt.

### Schritt 1c:

Durch Klick auf den Weiter-Link wird beim Webserver (ts Payment) angefragt, ob die Durchführung der Bezahlung erfolgt ist (Authorize Payment?). Diese Anfrage kann dadurch erfolgen, indem die Anfrage z.B. eine Transaktions-ID überträgt, welche mit einer Transkations-ID während des Autorisierungsvorganges übereinstimmt.

Bei negativer Rückmeldung (etwa weil noch keine Autorisierung über das mobile Endgerät durchgeführt worden ist) wird vom Webserver (tsInhalt) die für das stationäre Endgerät optimierte Seite 1 erneut mit einem entsprechendem Hinweis ausgegeben.

### Schritt 4:

Bei positiver Rückmeldung wird vom Webserver (tsInhalt) eine Bestätigungs-Seite 4 an das das stationäre Endgerät übertragen (Bestätigung). Diese enthält weiterführende Links, über welche der bezahlte Inhalt aufgerufen bzw. geladen werden kann oder weitere Transaktionen durchgeführt werden können.

Diese mit Bezug auf Fig. 3 beschriebene Steuerung des Ablaufes kann entweder innerhalb von tsInhalt implementiert werden oder mittels API in das Internet-Seiten-Angebot von Drittanbietern integriert werden. Der Abschluss einer in diesem Zusammenhang beschriebenen Transaktion bzw. die Ausprägung einer solchen wird hier im Detail nicht spezifiziert. So kann etwa im direkten Anschluss an die Autorisierung ein Bezahlungsvorgang initiiert und abgeschlossen werden oder es kann eine Bestätigung übermittelt werden, nach der die autorisierte Transaktion nach nicht näher genannten Kriterien abgeschlossen werden kann.

### 4) PC-WAP-SMS-Autorisierung

**Fig. 4** zeigt eine Form der Autorisierung (PC-WAP-SMS-Autorisierung) mit anschließender Bezahltransaktion über das sog. SMS-Billing bzw. wie eine User-Ermittlung / Geräte-Erkennung erfolgen kann, wenn eineWAP- oder PC-WAP-Autorisierung (wie sie in Fig. 3 beschrieben ist) technisch nicht möglich ist. Diese Ausführungsform basiert auf den Verfahren, wie sie mit Bezug auf Fig. 2 (SMS-Autorisierung) und Fig. 3 (PC-WAP-Autorisierung) beschrieben sind.

Die PC-WAP-SMS-Autorisierung kommt dann als Ersatz-Variante zum Einsatz, wenn die User-Ermittlung, Geräte-Erkennung bzw. Genehmigung von Bezahltransaktionen gemäß der WAP-Autorisierung oder PC-WAP-Autorisierung nicht durchgeführt werden kann.

Der Zugang bzw. die Initiierung der Autorisierung erfolgt (wie in Fig. 3) über einen Barcode, welcher auf einer Webseite platziert ist. Diese Webseite wird auf einer Anzeigeinrichtung eines stationären Gerätes (z.B. Computer) angezeigt.

Dieses Verfahren (nach Fig. 4) zeichnet sich dadurch aus, dass der über das stationäre Endgerät zugängliche Bereich mit dem über das mobile Endgerät durchgeführten Autorisierungsverfahren verknüpft ist. Das bedeutet, dass am stationären Endgerät auf den Autorisierungs-Vorgang hingewiesen wird. Sobald dieser über das mobile Endgerät durchgeführt worden ist, kann auf dem stationären Endgerät der bezahlte Inhalt eingesehen oder abgerufen werden, bzw. können anschließende Transaktionen (z.B. weitere Einkäufe) durchgeführt werden.

Das heißt, es wird zwischen Bereichen interagiert,
- die für die Darstellung von Webseiten am stationären Endgerät (z.B. PC-Monitor) angepasst bzw. optimiert sind, zur Durchführung z.B. eines Einkaufes von Inhalten oder Produkten, und
- die für die Darstellung von Webseiten auf dem Display von mobilen Endgeräten angepasst bzw. optimiert sind, zur Durchführung der Autorisierung (z.B. Genehmigung eines Einkaufes).

### Schrittw 1, 1a und 1b:

Die Schritte 1, 1a und 1b entsprechen im Wesentlichen den Schritten 1, 1a und 1b zu Fig. 3.

Anhand der Rückmeldung des Payment Providers (OK! oder NoOK!) wird eine entsprechende Bezahl-Transaktion eingeleitet:
- PC - WAP-Payment (OK!), vgl. Fig. 3, oder
- PC - SMS- Billing (NoOK!).

### Schritt 2:

Bei negativer Rückmeldung (NoOK!) durch den Payment-Provider wird die Internet-Seite 2 auf das mobile Endgerät mit folgenden Elementen übertragen: SMS-Anweisung, SMS-Text, SMS-Nummer, SMS-Link, Inhalt-Intro, Hinweise, Preise, AGB, etc. sowie ein Weiter-Link.

Der SMS-Link bzw. der Weiter-Link kann auch eine andere Bezeichnung haben.

Die nachfolgenden Schritte 3, 3a, 3b, 3c, 3d, 2a und 4 entsprechen im Wesentlichen den Schritten 3, 3a, 3b, 3c, 3d, 2a und 4 aus Fig. 2. Insofern kann auf die Beschreibung zu Fig. 2 verwiesen werden.

### Schritt 1c:

Durch Klicken auf den Weiter-Link in der Webseite 1 auf dem stationären Endgerät wird beim Webserver (tsPayment) angefragt (Authorize Payment?), ob die Durchrührung der Bezahlung erfolgt ist. Bei negativer Rückmeldung wird vom Webserver (tsInhalt) die für das stationäre Endgerät optimierte Seite 1 erneut mit einem entsprechendem Hinweis ausgegeben.

### Schritt 5:

Bei positiver Rückmeldung (Authorize / Payment?) vom Webserver wird eine Bestätigungs-Seite an das stationäre Endgerät geliefert (Bestätigung). Diese enthält weiterführende Links. Über diese Links kann der bezahlte Inhalt aufgerufen bzw. geladen werden oder weitere Transaktionen durchgeführt werden.

Diese mit Bezug auf Fig. 4 beschriebene Steuerung des Ablaufes kann entweder innerhalb von tsInhalt implementiert werden oder mittels API in das Internet-Seiten-Angebot von Drittanbietern integriert werden. Der Abschluss einer in diesem Zusammenhang beschriebenen Transaktion bzw. die Ausprägung einer solchen wird im Detail nicht näher spezifiziert. So kann etwa im direkten Anschluss an die Autorisierung ein Bezahlungsvorgang initiiert und abgeschlossen werden oder es kann eine Bestätigung übermittelt werden, nach der die autorisierte Transaktion nach nicht näher genannten Kriterien abgeschlossen werden kann.

### 5) PC - PremiumSMS-Autorisierung

**Fig. 5** zeigt eine Form der Autorisierung (PC-PremiumSMS-Autorisierung) mit gleichzeitiger Bezahltransaktion über das sog. SMS-Billing bzw. wie eine User-Ermittlung / Geräte-Erkennung erfolgen kann, wenn eine Autorisierung, wie sie in Fig. 1 bis Fig. 4 beschrieben sind, nicht eingesetzt werden können oder sollen.

Ausgangspunkt ist hier ein Barcode, welcher auf einer Webseite an dem stationären Endgerät angezeigt wird.

Sobald die Autorisierung bzw. die Bezahltransaktion über das mobile Endgerät (per SMS) durchgeführt worden ist, kann auf dem stationären Endgerät der bezahlte Inhalt eingesehen oder abgerufen werden oder weitere Transaktionen durchgeführt werden.

### Schritt 1:

Auf einer Internet-Seite 1 befindet sich ein 2D-Barcode. Der die Seite ausliefernde Webserver (tsInhalt oder ein eines Drittanbieters) erkennt mittels Useragent-Erkennung (oder Geräteerkennung), dass die Internet-Seite für ein stationäres Endgerät (z.B. PC-Monitor, Notebook, Laptop, o.ä.), ausgeliefert / ausgegeben werden muss. Die Internet-Seite 1 enthält neben dem Barcode folgende Elemente: SMS-Anweisung, SMS-Text, SMS-Nummer, Inhalt-Intro, Hinweise, Preise, AGB, etc. und einen Weiter-Link. In den Barcode ist eine SMS-Anweisung codiert.

### Schritt 2:

Als nächstes wird eine SMS erzeugt und versandt.

### Schritt 2a:

Das Erstellen der SMS kann manuell anhand der ausgegebenen Daten erfolgen.

### Schritt 2b:

Alternativ kann das Erstellen der SMS durch Fotografieren oder Scannen des Barcodes automatisch erfolgen. Das mobile Endgerät kann mithilfe eines Barcode-Readers über die Kamera den Barcode auslesen. Der Barcode-Reader erkennt die SMS-Zeichen und bietet die Option an, die SMS zu erzeugen und ggf. zu versenden. Es ist auch möglich, dass die SMS durch die native SMS-Applikation des mobilen Gerätes erzeugt wird.

Es kann vorgesehen sein, dass das Erzeugen und Versenden der SMS jeweils durch den Nutzer bestätigt werden muss.

### Schritt 2c:

Durch den Versand der SMS werden MSISDN, Transaktions-ID, SMS-Text, SMS-Zeichen, etc. an den Payment-Provider übermittelt (MSISDN User?).

### Schritt 2d:

Der Payment-Provider übermittelt dem Webserver (ts Payment) über eine Schnittstelle die MSISDN, den User, den Eigentümer und/oder eine spezielle ID (MSISDN User!) sowie ggf. Transaktionsdaten (welche z.B. im SMS-Text enthalten sein können). Daraufhin fragt der Webserver beim Payment-Provider die Durchführung der Bezahlung an (Payment OK?).

Der Payment-Provider meldet die Durchführung dieser Bezahltransaktion bei dem Mobilfunk-Netzbetreiber an. Die Zuordnung der MSISDN, des Users bzw. des Eigentümers zum entsprechenden Netzbetreiber sowie die Abfrage zur Durchführung einer Bezahltransaktion beim Netzbetreiber obliegen dem Payment-Provider. Bezüglich des weiteren Ablaufes zwischen Netzbetreiber und dem Payment-Provider wird auf Schritt 2a zu Fig. 1 verwiesen.

### Schritt 1a:

Durch Klicken auf den Weiter-Link in der Internet-Seite 1 wird beim Webserver (tsPayment) angefragt, ob die Durchführung der Bezahlung erfolgt ist (Authorize / Payment?). Bei negativer Rückmeldung wird vom Webserver (tsInhalt) die für das stationäre Endgerät optimierte Internet-Seite 1 erneut mit einem entsprechendem Hinweis ausgegeben.

### Schritt 3:

Bei positiver Rückmeldung (Authorize / Payment?) wird vom Webserver (tsInhalt) eine Bestätigungs-Seite 3 an das stationäre Endgerät ausgeliefert (Bestätigung). Diese Seite enthält weiterführende Links. Über diese Links kann der bezahlte Inhalt aufgerufen oder geladen werden bzw. weitere Transaktion initiiert werden.

Diese mit Bezug auf Fig. 5 beschriebene Steuerung des Ablaufes kann entweder innerhalb von tsInhalt implementiert werden oder mittels API in das Internet-Seiten-Angebot von Drittanbietern integriert werden. Der Abschluss einer in diesem Zusammenhang beschriebenen Transaktion bzw. die Ausprägung einer solchen ist nicht näher spezifiziert. So kann etwa im direkten Anschluss an die Autorisierung ein Bezahlungsvorgang initiiert und abgeschlossen werden oder es kann eine Bestätigung übermittelt werden, nach der die autorisierte Transaktion nach nicht näher genannten Kriterien abgeschlossen werden kann.

### 6) Verfahrenseinleitung für PC-WAP-Autorisierung oder PC-WAP-SMS-Autorisierung

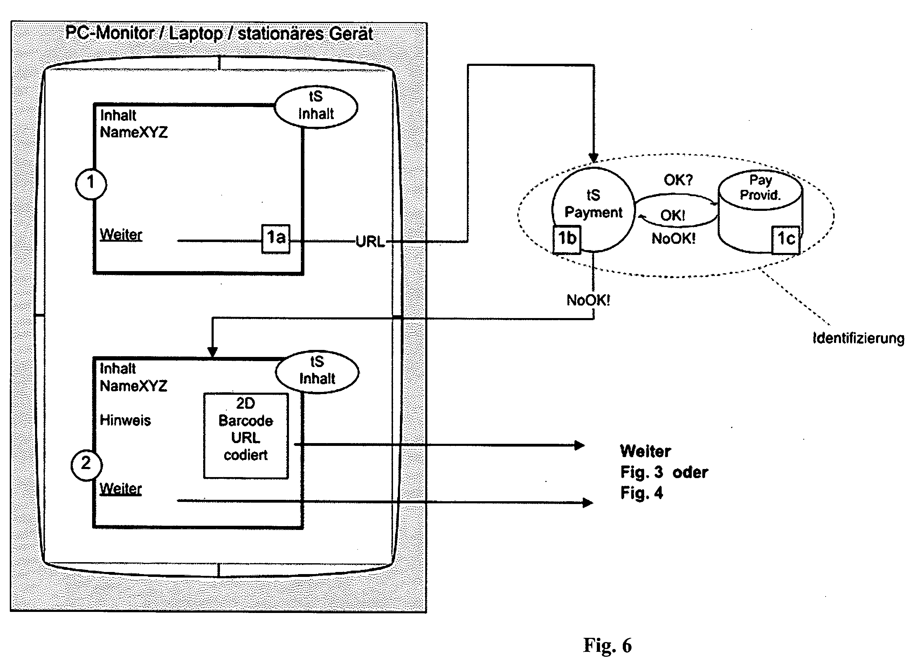

**Fig. 6** zeigt ein Verfahren, welches optional den Verfahren PC-WAP-Autorisierung (vgl. Fig. 3) und/oder PC-WAP-SMS-Autorisierung (Fig. 4). vorgeschaltet werden kann.

### Schritt 1:

Auf einer Internet-Seite 1 (auf einem stationäre Endgerät) befindet sich ein Inhalt-Intro und ein Weiter-Link. Das Inhalt-Intro kann aus Produkt beschreibenden Texten, Bildern, Preishinweisen, AGB etc. bestehen.

### Schritt 1a:

Durch Klicken auf den Weiter-Link wird beim Webserver (tsPayment) die Möglichkeit zur Durchführung einer Autorisierung (oder einer Bezahl-Transaktion) angefragt.

### Schritt 1b:

Über eine Schnittstelle wird beim Payment-Provider angefragt (OK?), ob für das anfragende Gerät die MSISDN, der User oder der Eigentümer ermittelt werden kann. Die Art der Ermittlung obliegt hierbei dem Payment-Provider.

### Schritt 1c:

Anhand der Rückmeldung des Providers (OK! oder NoOK!) wird der Autorisierungs-Prozess (und ggf. eine anschließende Bezahl-Transaktion) eingeleitet gemäß den Verfahren
- PC-WAP-Autorisierung (vgl. Fig. 3) oder
- PC-WAP-SMS-Autorisierung (vgl. Fig. 4)

Der Abschluss einer in diesem Zusammenhang beschriebenen Transaktion bzw. die Ausprägung einer solchen ist nicht näher spezifiziert. So kann etwa im direkten Anschluss an die Autorisierung ein Bezahlungsvorgang initiiert und abgeschlossen werden oder es kann eine Bestätigung übermittelt werden, nach der die autorisierte Transaktion nach nicht näher genannten Kriterien abgeschlossen werden kann.

### 7) Verfahrenseinleitung für PC-PremiumSMS-Autorisierung

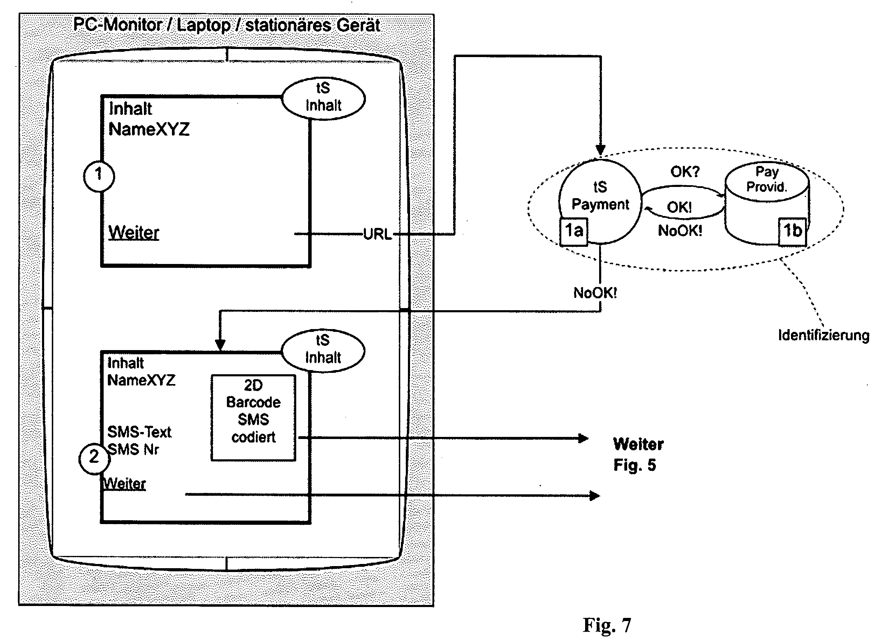

**Fig. 7** zeigt ein Verfahren, welches optional dem Verfahren PC-PremiumSMS-Autorisierung (vgl. Fig. 5) vorgeschaltet werden kann.

### Schritt 1:

Auf einer Internet-Seite 1 eines stationären Endgerätes befindet sich ein Inhalt-Intro und ein Weiter-Link. Das Inhalt-Intro kann aus Produkt beschreibenden Texten, Bildern, Preishinweisen, AGB etc. bestehen.

### Schritte 1a, 1b und 1c:

Die Schritte 1a, 1b und 1c entsprechen, den Schritten 1a, 1b und 1c zu Fig. 6, wobei im Schritt 1c anhand der Rückmeldung des Payment-Providers (OK! oder NoOK!) der Autorisierungs-Prozess (und ggf. eine anschließende Bezahl-Transaktion) gemäß dem Verfahren PC-PremiumSMS-Autorisierung (vgl. Fig. 5) eingeleitet wird. Der Abschluss einer in diesem Zusammenhang beschriebenen Transaktion bzw. die Ausprägung einer solchen wird hier im Detail nicht spezifiziert. So kann etwa im direkten Anschluss an die Autorisierung ein Bezahlungsvorgang initiiert und abgeschlossen werden oder es kann eine Bestätigung übermittelt werden, nach der die autorisierte Transaktion nach nicht näher genannten Kriterien abgeschlossen werden kann.

### 8) PC-WAP-Autorisierung kombiniert mit PC-PremiumSMS-Autorisierung

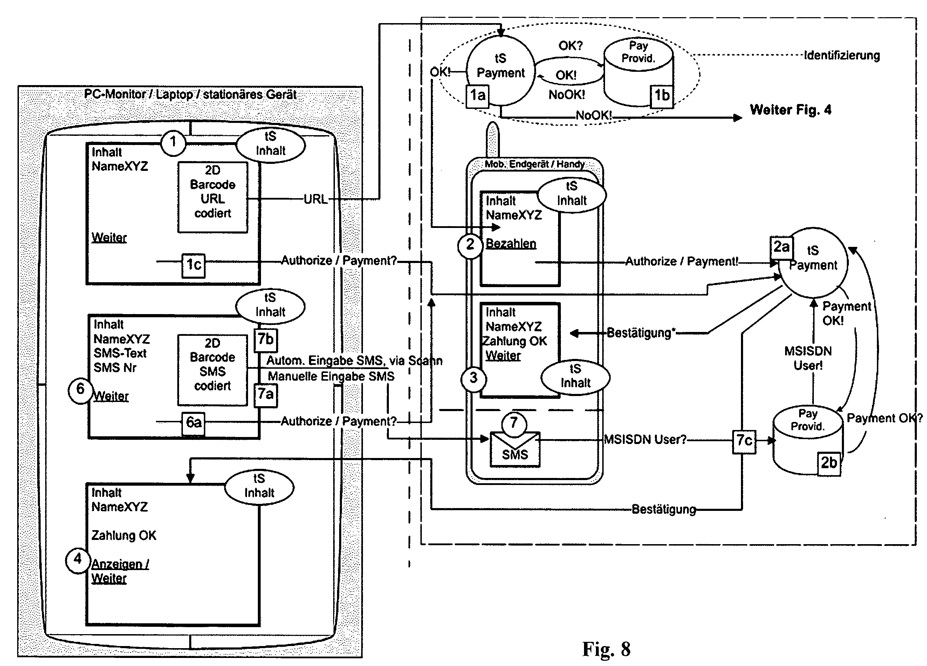

**Fig. 8** zeigt eine erfindungsgemäße Kombination der PC-WAP-Autorisierung (vgl. Fig. 3) mit der PC-PremiumSMS-Autorisierung (vgl. Fig. 5).

### Schritt 1:

Auf einer Internet-Seite, welche auf einem stationären Endgerät angezeigt wird, befindet sich ein 2D-Barcode. Der die Seite ausliefernde Webserver (tsInhalt oder der Webserver eines Drittanbieters) erkennt z.B. mittels Useragent-Erkennung (oder Geräteerkennung), dass die Internet-Seite für ein stationäres Endgerät (z.B. PC-Monitor, Notebook, Laptop, o.ä.) erstellt und ausgeliefert bzw. ausgegeben werden muss.

In den Barcode ist eine Internet-Adresse (URL) codiert. Das mobile Endgerät kann mithilfe einer Barcode-Reader-Software über die Kamera den Barcode auslesen. Der Barcode-Reader erkennt die Internet-Adresse und bietet die Option an, die Adresse im Browser des mobilen Endgerätes aufzurufen. Das Aufrufen der Seite kann gegebenenfalls vom Nutzer bestätigt werden. Der Browser des mobilen Endgeräts ruft die zur Internet-Adresse zugehörige Internet-Seite auf.

Zwei Prozesse werden im Rahmen der Identifizierung durchlaufen:
- Der Prozess "tsPayment" ermittelt ob eine Bezahltransaktion durchgeführt werden kann (Schritt 1b);
- Der Prozess "tsInhalt" ermittelt in welcher Form die Darstellung der Internet-Seite zu erfolgen hat (Schritt 1a).

Die Schritte 1a und 1b entsprechen den Schritten 1a und 1b wie sie mit Bezug zu Fig. 1 und Fig. 3 beschrieben sind.

Anhand der Rückmeldung des Providers (OK! oder NoOK!) wird der Autorisierungs-Prozess (und ggf. eine anschließende Bezahl-Transaktion) eingeleitet gemäß den Verfahren
- PC-WAP-Autorisierung (vgl. Fig. 3) oder
- PC-PremiumSMS-Autorisierung (vgl. Fig. 5).

### Schritt 2:

Bei positiver Rückmeldung (OK!) durch den Payment-Provider wird die Internet-Seite an das mobile Endgerät mit folgenden Elementen ausgegeben: Bezahlen-Link, Inhalt-Intro, Hinweise, Preise, AGB, etc. Der Bezahlen-Link kann auch eine andere Bezeichnung haben.

### Schritt 2a:

Durch Klick auf den Bezahlen-Link (der mobilen Internet-Seite) wird beim Webserver (tsPayment) die Möglichkeit der Durchführung der Bezahlung angefragt (Authorize Payment!). Der Webserver (tsPayment) fragt über eine Schnittstelle beim Payment-Provider die Durchführung der Bezahlung an (Payment OK?). Der Payment-Provider meldet die Durchführung dieser Bezahl-Transaktion wiederum bei den Mobilfunk-Netzbetreibern an. Die Zuordnung des MSISDN, des Users oder des Eigentümers zum entsprechenden Mobilfunk-Netzbetreiber sowie die Abfrage zur Durchführung einer Bezahltransaktion beim Netzbetreiber obliegt dem Payment-Provider.

### Schritt 2b:

Bei positiver Rückmeldung (Payment OK!) durch den Payment-Provider wird die Bezahltransaktion durchgeführt bzw. die Durchführung genehmigt.

### Schritt 3:

Der Webserver (tsInhalt) liefert daraufhin eine Internet-Seite an das mobile Endgerät mit einer Bestätigung sowie weiterführenden Links (Bestätigung*). Der Bezahlprozess bzw. die Darstellung des Bezahl-Vorgangs kann über ein oder mehrere Schritte erfolgen. Die Anzahl der durchzuführenden Schritte kann abhängig sein von den Prozessen zwischen dem Payment-Provider und dem entsprechenden Mobilfunk-Netzbetreiber, welcher in den jeweiligen Bezahlprozess involviert ist. Über die Links kann der bezahlte Inhalt aufgerufen bzw. geladen werden oder ein neuer Bezahl-Prozess oder eine weiterer Transaktion initiiert werden.

### Schritt 1c:

Durch Klicken auf den Weiter-Link (am stationären Endgerät) wird beim Webserver (tsPayment) angefragt, ob die Durchführung der Bezahlung erfolgt ist (Authorize Payment?) bzw. erfolgreich war.

### Schritt 4:

Bei positiver Rückmeldung (Authorize / Payment?) wird vom Webserver (tsInhalt) eine Bestätigungs-Seite an das stationäre Endgerät geliefert (Payment Bestätigung). Diese enthält weiterführende Links. Über diese Links kann der bezahlte Inhalt aufgerufen bzw. geladen werden oder eine weitere Transaktion bzw. ein neuer Bezahl-Prozess initiiert werden.

Die nachfolgenden Schritte sind charakteristisch für die Kombination der Verfahren PC-WAP-Autorisierung mit PC-PremiumSMS-Autorisierung.

### Schritt 6:

Bei negativer Rückmeldung für das stationäre Endgerät (weil etwa die Schritte 1a, 1b, 2, 2a, 2b, 3, etc. nicht vollständig durchgeführt worden sind) wird vom Webserver (tsInhalt) eine neue für das stationäre Endgerät optimierte Seite ausgegeben. Die Seite enthält neben einem neu erzeugten, weiteren Barcode folgende Elemente: SMS-Anweisung, SMS-Text, SMS-Nummer, Inhalt-Intro, Hinweise, Preise, AGB, und einen Weiter-Link. In den Barcode ist eine SMS codiert.

### Schritt 7:

Gemäß der SMS-Anweisung wird eine entsprechende SMS erzeugt.

### Schritt 7a:

Das SMS-Schreiben kann durch manuelle Eingabe erfolgen.

### Schritt 7b:

Das Erzeugen der SMS kann durch Scannen oder Fotografieren des Barcodes automatisch erfolgen. Das mobile Endgerät kann mithilfe einer Barcode-Reader-Software über die Kamera den Barcode auslesen. Der Barcode-Reader erkennt die SMS-Zeichen und bietet die Option an, die SMS zu erzeugen. Das Erzeugen wird gegebenenfalls vom Nutzer bestätigt. Hierbei wird in Abhängigkeit vom verwendeten mobilen Endgerät, der Version und der Funktionen der vorhandenen Browser-Software die SMS entweder durch den Browser, durch eine native SMS-Applikation oder durch die Barcode-Reader-Software erzeugt.

### Schritt 7c:

Durch den Versand der SMS werden MSISDN, Transaktions- ID, SMS-Text, SMS-Zeichen, Transaktionsdetails etc. an den Payment-Provider übermittelt (MSISDN User?). Die Transaktionsdetails können Bestandteil des SMS-Textes sein. Der Payment-Provider übermittelt dem Webserver (tsPayment) über eine Schnittstelle die MSISDN, den User, den Eigentümer und/oder eine spezielle ID (MSISDN User!). Daraufhin fragt der Webserver beim Payment-Provider die Durchführung der Bezahlung an (Payment OK?).

### Schritt 6a:

Durch Klick auf den Weiter-Link wird beim Webserver (tsPayment) angefragt, ob die Durchführung der Bezahlung erfolgt ist bzw. erfolgreich war (Authorize / Payment?). Bei negativer Rückmeldung (weil z.B. die Schritte 1 - 3 und 7 ff. nicht vollständig durchgeführt worden sind) wird vom Webserver (tsInhalt) eine neue für das stationäre Endgerät optimierte Seite 6 ausgegeben. Der Abschluss einer in diesem Zusammenhang beschriebenen Transaktion bzw. die Ausprägung einer solchen wird hier im Detail nicht spezifiziert. So kann etwa im direkten Anschluss an die Autorisierung ein Bezahlungsvorgang initiiert und abgeschlossen werden oder es kann eine Bestätigung übermittelt werden, nach der die autorisierte Transaktion nach nicht näher genannten Kriterien abgeschlossen werden kann.

### 9) PC-WAP-SMS- Autorisierung kombiniert mit PC-PremiumSMS-Autorisierung

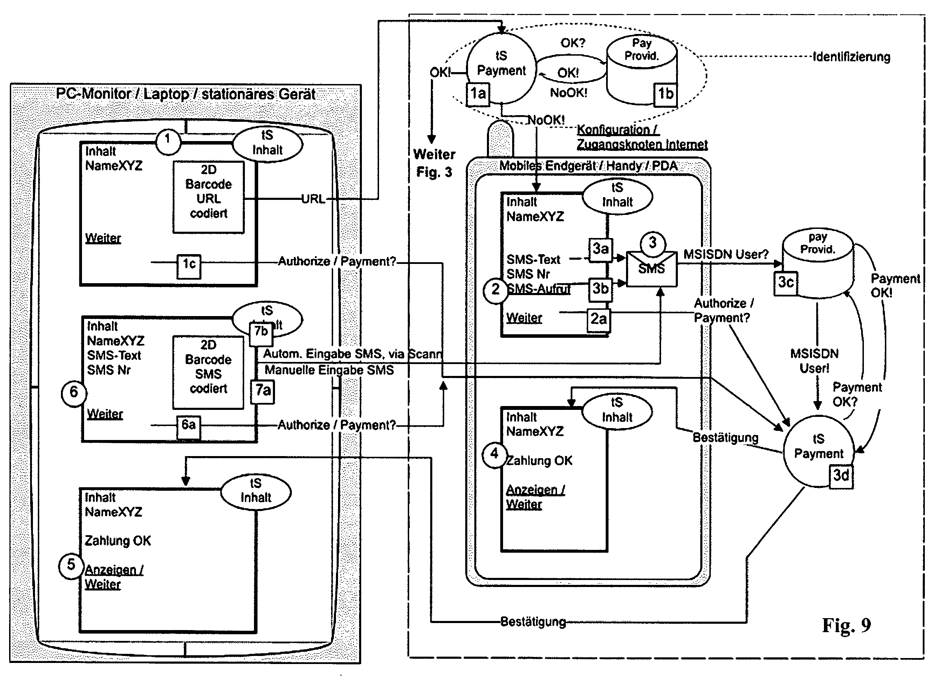

**Fig. 9** zeigt eine erfindungsgemäße Kombination der PC-WAP-SMS-Autorisierung (vgl. Fig. 4) mit der PC-PremiumSMS-Autorisierung (vgl. Fig. 5).

### Schritt 1:

Auf einer Internet-Seite des stationären Endgerätes befindet sich ein 2D-Barcode. Der die Internet-Seite ausliefernde Webserver (tsInhalt oder der Webserver eines Drittanbieters) erkennt mittels Useragent-Erkennung (oder Geräteerkennung), dass die Internet-Seite für einen stationäres Endgerät (z.B. Computer-Monitor, Notebook, Laptop, o.ä.) ausgeliefert bzw. ausgegeben werden muss. In den Barcode ist eine Internet-Adresse codiert. Das mobile Endgerät kann mit Hilfe einer Barcode-Reader-Software über die Kamera den Barcode auslesen. Der Barcode-Reader erkennt die Internet-Adresse und bietet die Option an, die Adresse im Browser des mobilen Endgerätes aufzurufen. Das Aufrufen wird gegebenenfalls vom Nutzer bestätigt.

Zwei Prozesse werden im Rahmen der Identifizierung durchlaufen (vgl. Fig. 1):
- der Prozess "tsPayment" ermittelt, ob eine Bezahltransaktion durchgeführt werden kann (Schritt 1b);
- der Prozess "tsInhalt" ermittelt, in welcher Form die Darstellung der Internet-Seite zu erfolgen hat (Schritt 1a).

Die Schritte 1a und 1b entsprechen den Schritten 1a und 1b, wie sie mit Bezug zu Fig. 1 und Fig. 3 beschrieben sind.

Anhand der Rückmeldung des Providers (OK! oder NoOK!) wird der Autorisierungs-Prozess (und ggf. eine anschließende Bezahl-Transaktion) eingeleitet gemäß den Verfahren
- 3) PC-WAP-Autorisierung (vgl. Fig. 3) oder
- 4) PC-WAP-SMS-Autorisierung (vgl. Fig. 4),

### Schritt 2:

Bei negativer Rückmeldung (NoOK!) durch den Payment-Provider wird die Internet-Seite an das mobile Endgerät mit folgenden Elementen ausgegeben: SMS-Anweisung, SMS-Text, SMS-Nummer, SMS-Link, Inhalt-Intro, Hinweise, Preise, AGB und ein Weiter-Link. Der SMS- bzw. der Weiter-Link kann auch eine andere Bezeichnung haben.

### Schritt 3:

Gemäß der SMS-Anweisung wird eine entsprechende SMS erzeugt.

### Schritt 3a:

Das SMS-Schreiben kann durch manuelle Eingabe erfolgen.

### Schritt 3b:

Das Erzeugen kann automatisch erfolgen, durch Klicken auf den SMS-Link. Hierbei wird in Abhängigkeit vom verwendeten mobilen Endgerät, der Version und der Funktionen der vorhandenen Browser-Software die SMS entweder durch den Browser oder durch die native SMS-Applikation erzeugt.

### Schritt 3c:

Durch den Versand der SMS werden MSISDN, Transaktions- ID, SMS-Text, SMS-Zeichen etc. an den Payment-Provider übermittelt (MSISDN User?).

### Schritt 3d:

Der Payment-Provider übermittelt dem Webserver (tsPayment) über eine Schnittstelle die MSISDN, den User, den Eigentümer und/oder eine spezielle ID (MSISDN User!). Daraufhin fragt der Webserver beim Payment-Provider die Durchführung der Bezahlung an (Payment OK?).

Der Payment-Provider meldet die Durchführung der Bezahl-Transaktion wiederum bei den Mobilfunk-Netzbetreibern an. Die Zuordnung der MSISDN, des Users bzw. des Eigentümers zum entsprechenden Netzbetreiber sowie die Abfrage zur Durchführung einer Bezahltransaktion beim Netzbetreiber obliegt dem Payment-Provider. Bezüglich des weiteren Ablaufes zwischen Netzbetreiber und dem Payment-Provider wird auf Schritt 2a zu Fig. 1 verwiesen.

### Schritt 2a:

Durch Klick auf den Weiter-Link wird beim Webserver (tsPayment) angefragt, ob die Durchführung der Bezahlung erfolgt ist bzw. erfolgreich war (Authorize Payment?).

### Schritt 4:

Bei positiver Rückmeldung (Payment OK!) durch den Payment-Provider liefert der Webserver (tsInhalt) eine Internet-Seite an das mobile Endgerät mit einer Bestätigung sowie weiterführenden Links (Payment-Bestätigung). Über die weiterrührenden Links kann der bezahlte Inhalt aufgerufen bzw. geladen werden oder eine neue Transaktion initiiert werden.

### Schritt 1c:

Durch Klick auf den Weiter-Link wird beim Webserver (tsPayment) angefragt, ob die Durchführung der Bezahlung erfolgt ist bzw. erfolgreich war (Authorize Payment?).

### Schritt 5:

Bei positiver Rückmeldung (Authorize/ Payment?) wird vom Webserver (tsInhalt) eine Bestätigungs-Seite an das stationäre Endgerät geliefert (Payment Bestätigung). Diese enthält weiterführende Links. Über die weiterführenden Links kann der bezahlte Inhalt aufgerufen bzw. geladen werden oder eine neue Transaktion initiiert werden.

Die nachfolgenden Schritte sind charakteristisch für die Kombination der Verfahren PC-WAP-SMS- Autorisierung mit PC-PremiumSMS-Autorisierung.

### Schritt 6:

Bei negativer Rückmeldung (weil z.B. die Schritte 1a, 1b, 2, 2a, 2b, 3 nicht oder nocht vollständig durchgeführt worden sind) wird vom Webserver (tsInhalt) eine neue für stationäre Endgeräte optimierte Internet-Seite ausgegeben. Diese Internet-Seite enthält neben einem neu erzeugten, weiteren Barcode folgende Elemente: SMS-Anweisung, SMS-Text, SMS-Nummer, Inhalt-Intro, Hinweise, Preise, AGB und einen Weiter-Link. In den Barcode ist eine SMS bzw. eine SMS-Anweisung codiert.

### Schritt 3:

Gemäß der SMS-Anweisung wird eine entsprechende SMS erzeugt.

### Schritt 7a:

Das SMS-Schreiben kann durch manuelle Eingabe erfolgen. Schritt 7a entspricht im Wesentlichen Schritt 3a.

### Schritt 7b:

Schritt 7b entspricht im Wesentlichen Schritt 3b. Das Erzeugen der SMS kann durch Scannen des Barcodes automatisch erfolgen. Das mobile Endgerät kann Mithilfe der Barcode-Reader-Software über die Kamera den Barcode auslesen. Der Barcode-Reader erkennt die SMS-Zeichen bzw. die SMS-Anweisung und bietet die Option an, die SMS zu erzeugen. Das Erzeugen wird gegebenenfalls vom Nutzer bestätigt. Hierbei wird in Abhängigkeit vom verwendeten mobilen Endgerät, der Version und der Funktionen der vorhandenen Browser-Software die SMS entweder durch den Browser, durch die native SMS-Applikation oder durch die Barcode-Reader-Software erzeugt.

### Schritt 3c:

Durch den Versand der SMS werden MSISDN, Transaktions- ID, SMS-Text, SMS-Zeichen, etc. an den Payment-Provider übermittelt (MSISDN User?). Der Payment-Provider übermittelt dem Webserver (tsPayment) über eine Schnittstelle die MSISDN, den User, den Eigentümer, eine spezielle ID (MSISDN User!) und/oder Transaktionsdetails (z.B. SMS-Text). Daraufhin fragt der Webserver beim Payment-Provider die Durchführung der Bezahlung an (Payment OK?).

### Schritt 6a:

Durch Klick auf den Weiter-Link wird beim Webserver (tsPayment) angefragt, ob die Durchführung der Bezahlung erfolgt ist (Authorize / Payment?). Bei negativer Rückmeldung (weil etwa die Schritte 1 bis 7 nicht oder nicht vollständig durchgeführt worden sind) wird vom Webserver (tsInhalt) eine neue für stationäre Endgeräte optimierte Seite 6 ausgegeben. Der Abschluss einer in diesem Zusammenhang beschriebenen Transaktion bzw. die Ausprägung einer solchen wird hier nicht im Detail spezifiziert. So kann etwa im direkten Anschluss an die Autorisierung ein Bezahlungsvorgang initiiert und abgeschlossen werden oder es kann eine Bestätigung übermittelt werden, nach der die autorisierte Transaktion nach nicht näher genannten Kriterien abgeschlossen werden kann.

In einem Aspekt der Erfindung wird ein Verfahren zur Durchführung einer Autorisierung einer Internet-Transaktion durch eine Autorisierungseinrichtung A bereitgestellt, wobei ein erstes Endgerät E1 und ein zweites Endgerät E2 über ein Kommunikationsnetzwerk mit der Autorisierungseinrichtung A koppelbar sind, wobei die Transaktion an einem der beiden Endgeräte E1, E2 durchführbar ist, wobei die Autorisierung an einem der beiden Endgeräte E1, E2 initiierbar ist, und wenn ein erster Autorisierungsvorgang AV1, welcher die Schritte
- Empfangen von Transaktionsdaten durch die Autorisierungseinrichtung A von einem der beiden Endgeräte E1, E2, wobei die Transaktionsdaten über einen ersten Übertragungskanal K1 empfangen werden; und
- Ermitteln, durch die Autorisierungseinrichtung A, einer ersten Kennung ID1, welche das eine Endgerät identifiziert;
umfasst, zu einer Verweigerung der Durchführung der Transaktion aufgrund einer fehlgeschlagenen Ermittlung der ersten Kennung ID1 führt;
die Autorisierungseinrichtung A aufgrund der Verweigerung Daten erzeugt zur Übertragung an eines der beiden Endgeräte E1, E2, wobei die Daten die Transaktionsdaten und eine Anweisung zur Initiierung eines zweiten Autorisierungsvorganges AV2 durch eines der beiden Endgeräte E1, E2 über einen zweiten Übertragungskanal K2 enthalten,
wobei die Transaktionsdaten über den zweiten Übertragungskanal K2 von der Autorisierungseinrichtung A empfangen werden, und
wobei das Erzeugen der Daten durch die Autorisierungseinrichtung A ein Ermitteln von Hardwareeigenschaften des ersten oder des zweiten Endgerätes und ein Anpassen der Daten an die ermittelten Hardwareeigenschaften umfasst.

Der zweite Autorisierungsvorgang AV2 kann von der Autorisierungseinrichtung A abgeschlossen werden und einen Schritt zum Ermitteln einer zweiten Kennung ID2 umfassen, wobei die zweite Kennung ID2 jenem Endgerät E2 zugeordnet ist, welches den zweiten Autorisierungsvorgang AV2 initiiert, und wobei die zweite Kennung ID2 jenes Endgerät E2 identifiziert, welches den zweiten Autorisierungsvorgang AV2 initiiert.

Der zweite Autorisierungsvorgang AV2 kann einen Schritt zum Ermitteln einer Transaktionsberechtigung umfassen.

Die Transaktionsberechtigung kann abhängig von der zweiten Kennung ID2 sein.

Das Ermitteln der zweiten Kennung ID2 kann eine Anfrage an eine Servereinrichtung und ein Empfangen der zweiten Kennung ID2 von der Servereinrichtung umfassen.

Die zweite Kennung ID2 kann über den zweiten Übertragungskanal von der Autorisierungseinrichtung A empfangen werden.

Die zweite Kennung ID2 kann die Mobile Subscriber Integrated Services Digital Network Number MSISDN sein.

Die Anweisung zur Initiierung des zweiten Autorisierungsvorganges AV2 kann mindestens eine der folgenden Daten umfassen:
- Daten zum manuellen Erzeugen und Versenden einer Kurznachricht;
- Daten zum automatischen Erzeugen und Versenden einer Kurznachricht eines vorherbestimmten Inhaltes an eine vorherbestimmte Telefonnummer; und/oder
- Graphischer Code, in welchem die Daten für ein automatisches Erzeugen und Versenden einer Kurznachricht eines vorherbestimmten Inhaltes an eine vorherbestimmte Telefonnummer codiert sind.

Das Ermitteln der Hardwareeigenschaften kann ein Ermitteln der Hardwareeigenschaften der Anzeigeeinrichtung des ersten oder des zweiten Endgerätes umfassen.

Das zweite Endgerät kann ein mobiles Endgerät sein, vorzugsweise ein mobiles Endgerät mit SMS-Funktionalität und Telefonie-Funktionalität.

Der erste Übertragungskanal K1 kann verschieden von dem zweiten Übertragungskanal K2 sein.

Der erste Übertragungskanal K1 kann ein WAP-Datenkanal oder ein IP-Datenkanal sein, wobei der zweite Übertragungskanal K2 ein Mobilfunk-Kurznachrichtenkanal ist.

Die Transaktion kann an dem ersten Endgerät E1 durchgeführt werden, wobei der Autorisierungsvorgang an dem zweiten Endgerät E2 initiiert wird.

In einem weiteren Aspekt er Erfindung wird ein Verfahren zur Durchführung einer Autorisierung einer Internet-Transaktion durch eine Autorisierungseinrichtung A bereitgestellt, wobei die Transaktion an einem ersten Endgerät E1 durchführbar ist, wobei der Autorisierungsvorgang an einem zweiten Endgerät E2 initiierbar ist und wobei die Autorisierung durch die Autorisierungseinrichtung A die Schritte umfasst:
- Empfangen von Transaktionsdaten durch die Autorisierungseinrichtung A von dem zweiten Endgerät E2;
- Ermitteln, durch die Autorisierungseinrichtung A, einer Kennung, welche das zweite Endgerät E2 identifiziert;Ermitteln einer Transaktionsberechtigung, welche der Kennung des zweiten Endgerätes E2 zuordenbar ist, wobei die Transaktionsberechtigung abhängig von den Transaktionsdaten ist;
- Freigeben der Durchführung der Internet-Transaktion in Abhängigkeit von der Transaktionsberechtigung; und
- Bereitstellen von Daten, welche indikativ für die Freigabe der Durchführung der Internet-Transaktion sind, zur Ausgabe auf dem ersten Endgerät E1 oder auf dem zweiten Endgerät E2, wobei die Daten die Durchführung der Internet-Transaktion ermöglichen.

Die Autorisierung kann einen Schritt zum Bereitstellen der Transaktionsdaten zur Ausgabe auf dem ersten Endgerät E1 oder zur Ausgabe auf dem zweiten Endgerät 2 umfassen.

Das Ermitteln der Transaktionsberechtigung und/oder die Freigabe der Durchführung der Transaktion kann zusätzlich abhängig von der Kennung des zweiten Endgerätes E2 sein, wobei die Freigabe der Durchführung der Transaktion erfolgt, wenn das Ermitteln der Kennung des zweiten Endgerätes E2 erfolgreich ist.

Das Ermitteln der Kennung des zweiten Endgerätes E2 kann eine Anfrage an eine Servereinrichtung und ein Empfangen der das zweite Endgerät E2 identifizierenden Kennung umfassen, wobei die Kennung des zweiten Endgerätes E2 zumindest eines aus Mobile Subscriber Integrated Services Digital Network Number MSISDN, Eigentümer und Eigentümer-ID umfasst.

Das Bereitstellen der Daten zur Ausgabe auf dem ersten Endgerät E1 oder auf dem zweiten Endgerät E2 kann ein Ermitteln der Eigenschaften der Anzeigeeinrichtung des ersten oder des zweiten Endgerätes und ein Anpassen der Daten an die Eigenschaften der Anzeigeeinrichtung umfassen.

In einem weiteren Aspekt umfasst die Erfindung eine Autorisierungseinrichtung A zur Durchführung einer Autorisierung einer Internet-Transaktion, wobei ein erstes Endgerät E1 und ein zweites Endgerät E2. über ein Kommunikationsnetzwerk mit der Autorisierungseinrichtung A koppelbar sind, wobei die Transaktion an einem der beiden Endgeräte E1, E2 durchführbar ist, wobei die Autorisierung an einem der beiden Endgeräte E1, E2 initiierbar ist, und wobei die Autorisierungseinrichtung ausgestaltet ist ein Verfahren auszuführen, welches zumindest folgende Schritte umfasst:
- Durchführen eines ersten Autorisierungsvorganges AV1, welcher umfasst:
   - Empfangen von Transaktionsdaten von einem der beiden Endgeräte E1, E2, wobei die Transaktionsdaten über einen ersten Übertragungskanal K1 empfangen werden; und
   - Ermitteln einer ersten Kennung ID1, welche das eine Endgerät identifiziert;
      und
- wenn der erste Autorisierungsvorgang AV1 zu einer Verweigerung der Durchführung der Transaktion aufgrund einer fehlgeschlagenen Ermittlung der ersten Kennung ID1 führt
   - Erzeugen von Daten zur Übertragung auf eines der beiden Endgeräte E1, E2, wobei die Daten die Transaktionsdaten und eine Anweisung zur Initiierung eines zweiten Autorisierungsvorganges AV2 durch eines der beiden Endgeräte über einen zweiten Übertragungskanal K2 enthalten, wobei die Transaktionsdaten über den zweiten Übertragungskanal K2 von der Autorisierungseinrichtung A empfangen werden, und wobei das Erzeugen der Daten durch die Autorisierungseinrichtung A ein Ermitteln von Hardwareeigenschaften des ersten oder des zweiten Endgerätes und ein Anpassen der Daten an die ermittelten Hardwareeigenschaften umfasst.

Der zweite Autorisierungsvorgang AV2 kann einen Schritt zum Ermitteln einer zweiten Kennung ID2 umfassen, wobei die zweite Kennung ID2 jenem Endgerät E2 zugeordnet ist, welches den zweiten Autorisierungsvorgang AV2 initiiert, und wobei die zweite Kennung ID2 jenes Endgerät E2 identifiziert, welches den zweiten Autorisierungsvorgang AV2 initiiert.

Der zweite Autorisierungsvorgang AV2 kann einen Schritt zum Ermitteln einer Transaktionsberechtigung umfassen.

Die Transaktionsberechtigung kann abhängig von der zweiten Kennung ID2 sein.

Das Ermitteln der zweiten Kennung ID2 kann eine Anfrage an eine Servereinrichtung und ein Empfangen der zweiten Kennung ID2 von der Servereinrichtung umfassen.

Die zweite Kennung ID2 kann über den zweiten Übertragungskanal von der Autorisierungseinrichtung A empfangen werden.

Die zweite Kennung ID2 kann eine Mobile Subscriber Integrated Services Digital Network Number MSISDN sein.

Die Anweisung zur Initiierung des zweiten Autorisierungsvorganges AV2 kann mindestens eine der folgenden Daten umfasset:
- Daten zum manuellen Erzeugen und Versenden einer Kurznachricht; oder
- Daten zum automatischen Erzeugen und Versenden einer Kurznachricht eines vorherbestimmten Inhaltes an eine vorherbestimmte Telefonnummer; oder
- Graphischer Code, in welchem die Daten für ein automatisches Erzeugen und Versenden einer Kurznachricht eines vorherbestimmten Inhaltes an eine vorherbestimmte Telefonnummer codiert sind.

Das Ermitteln der Hardwareeigenschaften kann ein Ermitteln der Hardwareeigenschaften der Anzeigeeinrichtung des ersten oder des zweiten Endgerätes umfassen. Das zweite Endgerät kann ein mobiles Endgerät sein, vorzugsweise ein mobiles Endgerät mit SMS-Funktionalität und Telefonie-Funktionalität.

Der erste Übertragungskanal K1 kann verschieden von dem zweiten Übertragungskanal K2 sein.

Der erste Übertragungskanal K1 kann ein WAP-Datenkanal oder ein IP-Datenkanal sein, wobei der zweite Übertragungskanal K2 ein Mobilfunk-Kurznachrichtenkanal ist.

## Patentansprüche

1. Verfahren zur Durchführung einer Autorisierung einer Internet-Transaktion durch eine Autorisierungseinrichtung (A), wobei die Transaktion an einem ersten Endgerät (E1) durchführbar ist, wobei der Autorisierungsvorgang an einem zweiten Endgerät (E2), das ein mobiles Endgerät ist, initiierbar ist, wobei das erste Endgerät (E1) und das zweite Endgerät (E2) über ein Kommunikationsnetzwerk mit der Autorisierungseinrichtung (A) koppelbar sind und wobei die Autorisierung durch die Autorisierungseinrichtung (A) die Schritte umfasst:
- Empfangen von Transaktionsdaten durch die Autorisierungseinrichtung (A) von dem zweiten Endgerät (E2);
- Ermitteln, durch die Autorisierungseinrichtung (A), einer Kennung, welche das zweite Endgerät (E2) identifiziert; das Verfaren wird charakterisiert:
- Ermitteln einer Transaktionsberechtigung, welche der Kennung des zweiten Endgerätes (E2) zuordenbar ist, wobei die Transaktionsberechtigung abhängig von den Transaktionsdaten ist;
- Freigeben der Durchführung der Internet-Transaktion in Abhängigkeit von der Transaktionsberechtigung; und
- Bereitstellen von Daten, welche indikativ für die Freigabe der Durchführung der Internet-Transaktion sind, zur Ausgabe auf dem ersten Endgerät (E1) oder auf dem zweiten Endgerät (E2), wobei die Daten die Durchführung der Internet-Transaktion ermöglichen.

2. Verfahren nach Anspruch 1, wobei die Autorisierung einen Schritt zum Bereitstellen der Transaktionsdaten zur Ausgabe auf dem ersten Endgerät (E1) oder zur Ausgabe auf dem zweiten Endgerät (2) umfasst.

3. Verfahren nach Anspruch 1 oder 2, wobei das Ermitteln der Transaktionsberechtigung und/oder die Freigabe der Durchführung der Transaktion zusätzlich abhängig von der Kennung des zweiten Endgerätes (E2) sind und wobei die Freigabe der Durchführung der Transaktion erfolgt, wenn das Ermitteln der Kennung des zweiten Endgerätes (E2) erfolgreich ist.

4. Verfahren nach einem der Ansprüche 1 bis 3, wobei das Ermitteln der Kennung des zweiten Endgerätes (E2) eine Anfrage an eine Servereinrichtung und ein Empfangen der das zweite Endgerät (E2) identifizierenden Kennung umfasst, wobei die Kennung des zweiten Endgerätes (E2) zumindest eines aus Mobile Subscriber Integrated Services Digital Network Number (MSISDN), Eigentümer und Eigentümer-ID umfasst.

5. Verfahren nach einem der Ansprüche 1 bis 4, wobei das Bereitstellen der Daten zur Ausgabe auf dem ersten Endgerät (E1) oder auf dem zweiten Endgerät (E2) ein Ermitteln der Eigenschaften der Anzeigeeinrichtung des ersten oder des zweiten Endgerätes und ein Anpassen der Daten an die Eigenschaften der Anzeigeeinrichtung umfasst.

## Claims

1. A method of carrying out an authorisation of an internet transaction by an authorising device (A), said transaction being capable of being carried out on a first terminal (E1), the authorisation process being capable of being initiated on a second terminal (E2) which is a mobile terminal, said first terminal (E1) and said second terminal (E2) being capable of coupling to the authorising device (A) via a communications network, and said authorisation by the authorising device (A) comprising the steps of:
- receiving transaction data originating from the second terminal (E2) by the authorising device (A);
- determining, by the authorising device (A), of an identifier which identifies said second terminal (E2); wherein said method is **characterised by** the steps of:
- determining a transaction authorisation capable of being attributed to the identifier of the second terminal (E2), said transaction authorisation depending on the transaction data;
- releasing the carrying out of the internet transaction depending on said transaction authorisation; and
- providing data indicative of said release of the carrying out of the internet transaction for output on the first terminal (E1) or on the second terminal (E2), said data enabling the carrying out of the internet transaction.

2. The method as claimed in claim 1, wherein said authorisation comprises a step of providing said transaction data for output on said first terminal (E1) or for output on said second terminal (E2).

3. The method as claimed in claim 1 or 2, wherein determining the transaction authorisation and/or releasing the carrying out of the transaction additionally depend on the identifier of the second terminal (E2), and wherein the release of the carrying out of the transaction is effected once the identifier of the second terminal (E2) has successfully been determined.

4. The method as claimed in any one of claims 1 to 3, wherein determining the identifier of the second terminal (E2) comprises sending a request to a server device and receiving the identifier identifying said second terminal (E2), said identifier including at least one of a Mobile Subscriber Integrated Services Digital Network Number (MSISDN), an owner, and an owner ID.

5. The method as claimed in any one of claims 1 to 4, wherein providing the data for output on the first terminal (E1) or on the second terminal (E2) comprises determining the properties of the display means of the first or the second terminal and adapting the data to the properties of said display means.

## Revendications

1. Procédé destiné à réaliser une autorisation pour une transaction internet au moyen d'un dispositif d'autorisation (A), la transaction pouvant être réalisée sur un premier terminal (E1), le processus d'autorisation pouvant être initié sur un deuxième terminal (E2) qui est un terminal mobile, le premier terminal (E1) et le deuxième terminal (E2) pouvant être couplés au dispositif d'autorisation (A) par le biais d'un réseau de communication et l'autorisation réalisée par le dispositif d'autorisation (A) comprenant les étapes suivantes:
- la réception, par le dispositif d'autorisation (A), de données de transaction provenant du deuxième terminal (E2);
- la détermination, par le dispositif d'autorisation (A), d'un identifiant qui identifie le deuxième terminal (E2); ledit procédé étant **caractérisé par**:
- la détermination d'une autorisation de transaction qui peut être allouée à l'identifiant du deuxième terminal (E2), l'autorisation de transaction dépendant des données de transaction;
- la libération de la réalisation de la transaction internet en fonction de l'autorisation de transaction; et
- la fourniture de données qui sont indicatives de la libération de la réalisation de la transaction internet, et ce pour la sortie sur le premier terminal (E1) ou sur le deuxième terminal (E2), les données rendant possible la réalisation de la transaction internet.

2. Procédé selon la revendication 1 selon lequel l'autorisation comprend une étape dans laquelle sont fournies les données de transaction pour la sortie sur le premier terminal (E1) ou pour la sortie sur le deuxième terminal (E2).

3. Procédé selon la revendication 1 ou 2 selon lequel la détermination de l'autorisation de transaction et/ou la libération de la réalisation de la transaction dépendent en outre de l'identifiant du deuxième terminal (E2) et selon lequel la réalisation de la transaction est libérée lorsque l'identifiant du deuxième terminal (E2) a été déterminé avec succès.

4. Procédé selon l'une quelconque des revendications 1 à 3 selon lequel la détermination de l'identifiant du deuxième terminal (E2) comprend une demande à un dispositif serveur et une réception de l'identifiant qui identifie le deuxième terminal (E2), l'identifiant du deuxième terminal E2) comprenant au moins l'un des éléments suivants: le numéro de réseau numérique à services intégrés de station mobile (MSISDN), le propriétaire et l'identifiant propriétaire.

5. Procédé selon l'une quelconque des revendications 1 à 4 selon lequel la fourniture des données pour la sortie sur le premier terminal (E1) ou sur le deuxième terminal (E2) comprend une détermination des propriétés du dispositif d'affichage du premier ou du deuxième terminal et une adaptation des données auxdites propriétés du dispositif d'affichage.
